(19) Europäisches Patentamt
European Patent Office
Office européen des brevets

(11) **EP 4 693 478 A2**

(12) **EUROPEAN PATENT APPLICATION**

(43) Date of publication:
**11.02.2026 Bulletin 2026/07**

(21) Application number: **25173011.5**

(22) Date of filing: **28.04.2025**

(51) International Patent Classification (IPC):
*H01M 4/36* (2006.01)   *H01M 4/38* (2006.01)
*H01M 4/54* (2006.01)   *H01M 4/583* (2010.01)
*H01M 4/587* (2010.01)   *H01M 10/0562* (2010.01)

(52) Cooperative Patent Classification (CPC):
**H01M 4/366; H01M 4/38; H01M 4/54; H01M 4/583; H01M 4/587; H01M 10/0562;** H01M 2004/021; H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.08.2024 KR 20240104128**
**03.04.2025 KR 20250043604**

(71) Applicant: **SAMSUNG SDI CO., LTD.**
**Yongin-si, Gyeonggi-do 17084 (KR)**

(72) Inventors:
• **KIM, Kyounghwan**
**16678 Suwon-si (KR)**
• **SHIN, Jaeho**
**16678 Suwon-si (KR)**

(74) Representative: **Elkington and Fife LLP**
**Prospect House**
**8 Pembroke Road**
**Sevenoaks, Kent TN13 1XR (GB)**

(54) **ANODE-SOLID ELECTROLYTE SUB-ASSEMBLY FOR SOLID SECONDARY BATTERY, SOLID SECONDARY BATTERY INCLUDING THE SAME, AND METHOD OF MANUFACTURING THE SOLID SECONDARY BATTERY**

(57)   An anode-solid electrolyte sub-assembly, a solid secondary battery including the anode-solid electrolyte sub-assembly, and a method of manufacturing a solid secondary battery. The anode-solid electrolyte sub-assembly including an anode and a solid electrolyte, wherein the anode includes an anode current collector, a first anode active material layer disposed adjacent to the solid electrolyte, and including a first carbon-based anode active material, and a second anode active material layer disposed between the first anode active material layer and the anode current collector and including a second carbon-based anode active material, wherein the first and the second carbon-based anode active materials have different peak areas a D band peak and a G band peak in a respective Raman analysis, and the first and second carbon-based anode active materials an each have oxygen content of 3 at% or less.

FIG. 1

**Description**

FIELD OF THE INVENTION

The disclosure relates to an anode-solid electrolyte sub-assembly for a solid secondary battery, a solid secondary battery including the anode-solid electrolyte sub-assembly, and a method of manufacturing the solid secondary battery.

BACKGROUND OF THE INVENTION

Because flammable organic solvents are not present in solid secondary batteries, even if a short circuit were to occur, the possibility of a fire or an explosion is considerably less likely. Therefore, it is generally accepted that solid secondary batteries may be considerably safer to use as compared to lithium-ion batteries that include the presence of electrolytes.

In order to increase the energy density of solid secondary batteries, lithium may be used as an anode active material. For example, the capacity density (capacity per unit mass) of lithium metal is known to be about 10 times greater than that of graphite, which is commonly used as an anode active material. Therefore, by using lithium as an anode active material, solid secondary batteries may be made relatively thinner and still the capacity of the battery may be increased.

To increase the energy density of solid secondary batteries, a precipitation-type anode in which a material or compound that forms an alloy with lithium may be inserted between an anode and a solid electrolyte and used as a protective layer for lithium metal. The lithium moves between an anode current collector and a protective layer during charging resulting in changes in the thickness of an anode as lithium precipitates. The change in the structural thickness of the anode during repeated charge and discharge cycles is expected to cause stress and strain within the battery, and over time result in a structural or chemical deterioration of the battery, e.g., the battery driving characteristics. Therefore, there is a demand for strain-free anodes that undergo little, if any, change in thickness or pressure of a battery as lithium precipitates during a charge cycle.

SUMMARY OF THE INVENTION

Provided is an anode-solid electrolyte sub-assembly for a solid secondary battery, in which, during and after charging and discharging, a change in thickness of a battery is suppressed, and a change in internal stress of the battery is also suppressed.

Provided is a solid secondary battery that includes the anode-solid electrolyte sub-assembly, which provides the battery with improved lifespan characteristics, e.g., during a low-pressure operation, and a method of manufacturing the sub-assembly as well as the battery.

Additional aspects will be set forth in part in the description which follows and, in part, will be apparent from the description, or may be learned by practice of the presented embodiments of the disclosure.

According to an aspect, an anode-solid electrolyte sub-assembly includes an anode and a solid electrolyte, wherein the anode includes an anode current collector, a first anode active material layer disposed adjacent to the solid electrolyte and including a first carbon-based anode active material, and a second anode active material layer disposed between the first anode active material layer and the anode current collector and including a second carbon-based anode active material.

The first anode active material layer includes an area ratio ($A^1D/A^1G$) of a D band peak to a G band peak obtained by Raman analysis of the first carbon-based anode active material, and the second anode active material layer includes an area ratio ($A^2D/A^2G$) of a D band peak to a G band peak obtained by Raman analysis of the second carbon-based anode active material, the area ratio ($A^1D/A^1G$) is larger than the area ratio ($A^2D/A^2G$), and the first carbon-based anode active material and the second carbon-based anode active material each have an oxygen content of 3 at% or less as determined by X-ray photoelectron spectroscopy (XPS) analysis.

The area ratio ($A^1D/A^1G$) may be 2 or more, for example, about 2 to about 5, and the area ratio ($A^2D/A^2G$) may be less than 2, for example, 1 to less than 2.

An intensity ratio ($I^1D/I^1G$) of a D band peak to a G band peak of the first carbon-based anode active material may be less than an intensity ratio ($I^2D/I^2G$) of a D band peak to a G band peak of the second carbon-based anode active material. For example, the intensity ratio ($I^1D/I^1G$) may be 0.98 or less, and the intensity ratio ($I^2D/I^2G$) may be 1 or more.

A particle size of the second carbon-based anode active material may be greater than a particle size of the first carbon-based anode active material of the first anode active material layer.

A size of an internal pore of a porous carbon structure may be about 10 nm to about 200 nm, and the size of the pore between the particles of the porous carbon structure may be about 100 nm to about 1 $\mu$m. In addition, the porous carbon structure may be an ordered mesoporous carbon (OMC) structure, a hybrid carbon structure, a dual porous carbon structure, or a combination thereof.

The first anode active material layer may include a first carbon-based anode active material and a first particle of at least one metal or metalloid anode active material, a mixing weight ratio of the first carbon-based anode active material to the first particle may be about 1:1 to about 5:1. The second anode active material layer may include the second carbon-based anode active material and a second particle of at least one metal or metalloid anode active material, and a mixing weight ratio of the second carbon-based anode electrode active material to the second particle may be about 1:1 to about 5:1.

According to another aspect, a solid secondary battery includes a cathode and the above-described anode-solid electrolyte sub-assembly, wherein the solid electrolyte of the anode-solid electrolyte sub-assembly is disposed between the cathode and the anode.

In the solid secondary battery, a content of a lithium metal that is charged and discharged by a reaction of lithium with the first carbon-based anode active material of the first anode active material layer and the second carbon-based anode active material of the second anode active material layer may be 20 % or less based on a total capacity of the solid secondary battery.

According to another aspect of the disclosure, a method of manufacturing a solid secondary battery includes

coating an anode current collector with a composition for forming a second anode active material layer containing a second carbon-based anode active material and drying the composition to form a second anode active material layer, and resulting in a stack structure of the anode current collector and the second anode active material layer,

coating the second anode active material layer of the stack of the anode current collector and the second anode active material layer with a composition for forming a first anode active material layer containing a first carbon-based anode active material and drying the composition to form a first anode active material layer and provide an anode,

providing a solid electrolyte on the first anode active material layer of the anode to provide an anode-solid electrolyte sub-assembly, and

providing the cathode on the solid electrolyte of the anode-solid electrolyte sub-assembly to prepare a battery assembly to manufacture the above-described solid secondary battery.

BRIEF DESCRIPTION OF THE DRAWINGS

The above and other aspects, features, and advantages of certain embodiments of the disclosure will be more apparent from the following description taken in conjunction with the accompanying drawings.

FIG. 1 is a schematic representation of a structure of an anode-solid electrolyte sub-assembly according to an embodiment.

FIG. 2A is a schematic representation of a structure of a solid secondary battery including an anode-solid electrolyte sub-assembly according to an embodiment.

FIG. 2B is a schematic representation of a structure of a solid secondary battery including an anode-solid electrolyte sub-assembly according to an embodiment.

FIGS. 3A, 3B, and 3C are each a schematic representation of a structure of a solid secondary battery according to embodiments.

FIG. 4 is scanning electron micrograph (SEM) analysis of an anode manufactured according to Comparative Example 1.

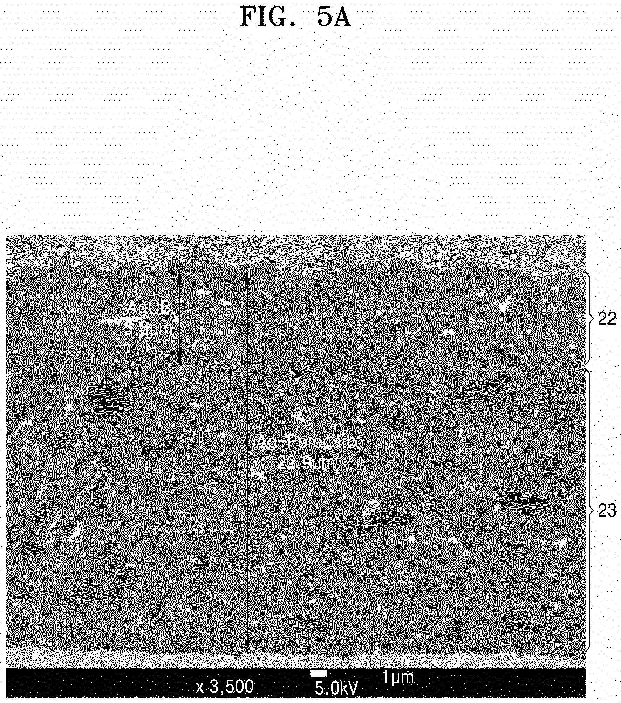

FIG. 5A shows an image obtained by SEM analysis of an anode of Example 1.

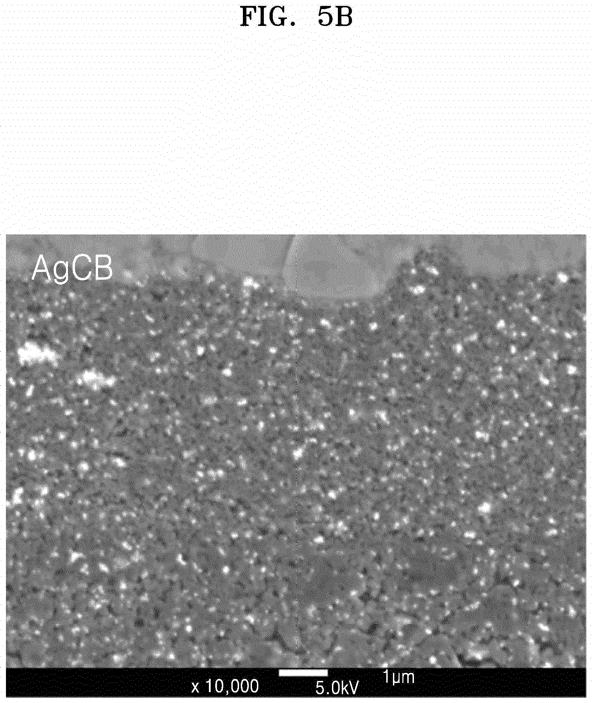

FIG. 5B shows the results of a SEM micrograph analysis of a first anode active material layer in the anode of FIG. 5A.

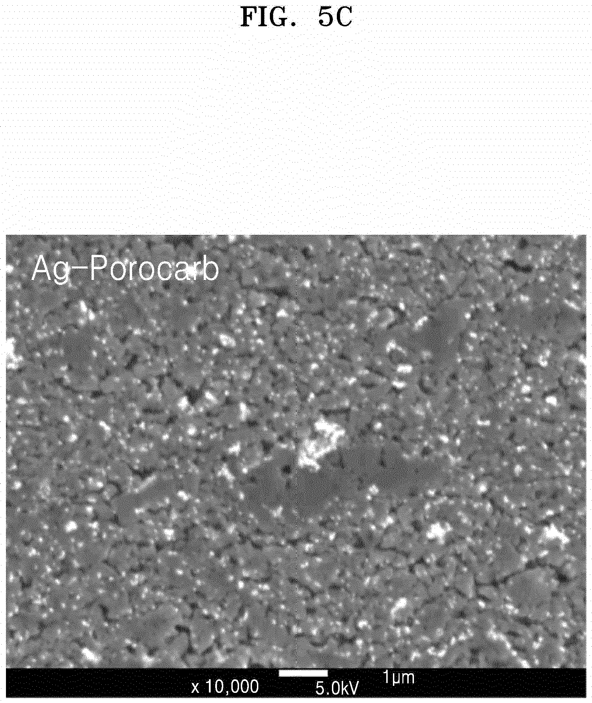

FIG. 5C shows the results of a SEM micrograph analysis of a second anode active material layer in the anode of FIG. 5A.

FIGS. 6A and 6B show Raman analysis spectra of a first anode active material layer (first layer) and a second anode active material layer (second layer) in an anode of Example 1, respectively.

FIGS. 7A and 7B show Raman analysis spectra of a first anode active material layer (first layer) and a second anode active material layer (second layer) in an anode of Example 2, respectively.

FIGS. 8A and 8B show Raman analysis spectra of a first anode active material layer (first layer) and a second anode active material layer (second layer) in an anode of Example 3, respectively.

FIG. 9 shows Raman analysis spectra of a first anode active material layer (first layer) in an anode of Comparative Example 1.

FIGS. 10A and 10B show Raman analysis spectra of a first anode active material layer (first layer) and a second anode active material layer (second layer) in an anode of Comparative Example 2, respectively.

FIGS. 11A and 11B show Raman analysis spectra of a first anode active material layer (first layer) and a second anode active material layer (second layer) in an anode of Comparative Example 3, respectively.

FIGS. 12A, 12B, and 12C show changes in pressure after charging and discharging of solid secondary batteries of Examples 1 to 3 respectively.

FIGS. 12D, 12E, and 12F show changes in pressure after charging and discharging of solid secondary batteries of Comparative Example 1, 2, and 3, respectively.

FIG. 13A 13B, and 13C shows the capacity retention rate characteristics of solid secondary batteries of Examples 1, 2, and 3 respectively.

FIG. 13D, 13E, and 13F shows the capacity retention rate characteristics of solid secondary batteries of Comparative Examples 1, 2, and 3, respectively.

FIG. 14A and 14B show voltage changes with respect to specific capacity in a full cell using a solid electrolyte and a half cell using a liquid electrolyte, respectively.

FIGS. 15A, 15B, and 15C are each a schematic representation of a structure of a solid secondary battery according to some embodiments.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects.

Unless otherwise defined, all terms (including technical and scientific terms) used in the disclosure have the same meaning as commonly understood by one of ordinary skill in the art to which the disclosure belongs. In addition, it will be further understood that terms, such as those defined in commonly used dictionaries, should be interpreted as having a meaning that is consistent with their meaning in the context of the relevant art and the disclosure, and will not be interpreted in an idealized or overly formal sense unless expressly so defined herein.

Embodiments are described in the disclosure including with reference to cross-sectional views which are schematic diagrams of idealized embodiments. As such, variations from the shapes of the illustrations as a result, for example, of manufacturing techniques and/or tolerances, are to be expected. Thus, the embodiments described in the disclosure should not be construed as limited to the particular shapes of regions of illustrated in the disclosure but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

The disclosure may, however, be embodied in different forms and should not be construed as limited to the embodiments described in the disclosure. These embodiments are provided so that the disclosure will be thorough and complete, and will fully convey the scope of the disclosure to those skilled in the art. Like reference numerals designate like elements.

When it is described that an element is "on" another element, it will be understood that the element may be disposed directly on another element or still another element may be interposed therebetween. On the other hand, when it is described that an element is "directly on" another element, still another element is not interposed therebetween.

It will be understood that, although the terms "first," "second," and "third" may be used in the disclosure to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section described below may be termed a second element, component, region, layer, or section without departing from the teachings of the disclosure.

The term used in the disclosure is intended to describe only a specific embodiment and is not intended to limit the disclosure. As used herein, the singular forms "a," "an," and "the" are intended to include the plural forms, including "at least one," unless the content clearly indicates otherwise. "At least one" should not be construed as being limited to the singular. As used in the disclosure, the term "and/or" includes any and all combinations of one or more of the associated listed items. The terms "includes," "including," "comprises," and/or "comprising," when used in the detailed description, specify a presence of stated features, regions, integers, steps, operations, elements, and/or components, but do not preclude the presence or addition of one or more other features, regions, integers, steps, operations, elements, components, and/or groups thereof.

"Group" refers to a group of the periodic table of the elements according to the International Union of Pure and Applied Chemistry ("IUPAC") Groups 1-18 group classification system.

In the disclosure, the term "particle diameter" refers to an average diameter when particles are spherical and refers to an average major axis length when particles are non-spherical. The average particle diameter and the average major axis length represent the average values of the measured particle diameter and the measured major axis length, respectively. The particle diameter may be measured using a particle size analyzer (PSA).

The "particle diameter" is, for example, an average particle diameter. The "average particle diameter" refers to, for example, a median particle diameter (D50). D50 refers to a particle size corresponding to a 50 % cumulative volume when a particle size distribution measured through a laser diffraction method is calculated from particles having a smaller particle size. D90 refers to a particle size corresponding to a 90 % cumulative volume when a particle size distribution measured through a laser diffraction method is calculated from particles having a smaller particle size. D10 is the particle size corresponding to 10% of the cumulative volume calculated from the particle side with the small particle size in the particle size distribution measured by laser diffraction.

In the disclosure, an average particle diameter and an average major axis length refer to an average value of measured particle diameters and an average value of measured major axis lengths, respectively. An average particle diameter and an average major axis length may be evaluated through image analysis using a scanning electron microscope (SEM) or transmission electron microscope. The average particle diameter may be, for example, an average particle diameter observed by using a SEM and may be calculated as an average value of diameters of about 10 to 30 particles by using a SEM image.

As used herein, a pore size refers to an average pore size. In an embodiment of the disclosure, a pore size may be measured by using a Brunauer-Emmett-Teller (BET) method or a SEM method. According to the SEM method, a pore size may be evaluated by using image analysis.

The term "pore size" refers to an average diameter when pores are spherical and refers to an average major axis length when pores are non-spherical. The average diameter and the average major axis length refer to an average value of measured particle diameters and an average value of measured major axis lengths, respectively. The average diameter and the average major axis length may be evaluated through image analysis using a scanning electron microscope (SEM) or transmission electron microscope. The average diameter may be, for example, an average particle diameter observed by using a SEM and may be calculated as an average value of diameters of about 10 to 30 pores by using a SEM image.

As used herein, the term "metal" includes all of metals and metalloids such as silicon and germanium in an elemental or ionic state, and the term "alloy refers to a mixture of two or more metals.

The term "electrode active material" as used herein refers to an electrode material that may undergo lithiation and delithiation. As used herein, the term "cathode active material" refers to a cathode material that may undergo lithiation and delithiation, and the term "anode active material" refers to an anode material that may undergo lithiation and delithiation.

As used herein, the terms "lithiation" and "lithiate" refer to a process of adding lithium to an electrode active material, and the terms "delithiation" and "delithiate" refer to a process of removing lithium from an electrode active material.

As used herein, the terms "charge" and "charging" refer to a process of providing electrochemical energy to a battery, and the terms "discharge" and "discharging" refer to a process of removing electrochemical energy from a battery.

As used herein, the terms "positive electrode" and "cathode" refer to an electrode at which electrochemical reduction and lithiation occur during a discharging process, and the terms "negative electrode" and "anode" as used herein refer to an electrode at which electrochemical oxidation and delithiation occur during a discharging process.

As used herein, the "weight average molecular weight" of polymers may be evaluated by polystyrene conversion gel permeation chromatography.

As used herein, the terms "Intra-particle porosity" is defined herein as the ratio of the volume of pores within a particle to the total volume of the particle. Inter-particle porosity is the volume of pores between individual particles and is a function of both the size and shape of the individual particles and the packing density of the particles within a layer.

While specific embodiments have been described, alternatives, modifications, variations, improvements, and substantial equivalents that are or may be presently unforeseen may arise to applicants or others skilled in the art. Therefore, the appended claims as filed and as they may be amended are intended to embrace all such alternatives, modifications, variations, improvements, and substantial equivalents.

Hereinafter, an anode-solid electrolyte sub-assembly for a solid secondary battery, a solid secondary battery including the same, and a method of manufacturing the solid secondary battery according to an embodiment will be described in more detail with reference to the accompanying drawings. Meanwhile, embodiments set forth herein are merely examples and various changes may be made therein.

When a first anode active material layer including carbon and silver (Ag) is formed as an interlayer between an anode current collector and a solid electrolyte of a solid secondary battery, lithium precipitates between the first anode active material layer and the anode current collector. Since the precipitation of lithium causes a change in thickness of the battery, pressure inside a cell repeatedly changes, and strain and internal stress may be generated in the battery, each of which may adversely affect the driving characteristics of the battery. Further, a change in pressure in the battery may cause a contact failure between a solid electrolyte and an active material at an electrode interface, which may cause the deterioration of lifespan characteristics of the solid secondary battery.

In addition, when the pressure applied during operation of a cell is low, plastic flow behavior of lithium is restricted, and irregular lithium precipitation occurs. The result is a phenomenon in which irregular pressure is locally applied, which may lead to a primary cause of the deterioration in performance of the solid secondary battery. Accordingly, in order to solve such a problem, there is provided an anode-solid electrolyte sub-assembly including an anode and a solid electrolyte, wherein the anode comprises an anode current collector, a first anode active material layer disposed adjacent to the solid electrolyte and including a first carbon-based anode active material, and a second anode active material layer disposed between the first anode active material layer and the anode current collector and including a second carbon-based anode active material.

The first and the second anode active material layers include an area ratio ($A^1D/A^1G$) of a D band peak to a G band peak obtained by Raman analysis of the first carbon-based anode active material that is larger than an area ratio ($A^2D/A^2G$) of a D band peak to a G band peak obtained by Raman analysis of the second carbon-based anode active material, and each of the first carbon-based anode active material and the second carbon-based anode active material has an oxygen content of about 3 at% or less as determined by X-ray photoelectron spectroscopy (XPS) analysis.

The fact that the area ratio ($A^1D/A^1G$) is greater than the area ratio ($A^2D/A^2G$) means that the crystallinity of the first carbon-based anode active material is lower than the crystallinity of the second carbon-based anode active material, and that the first carbon-based anode active material may have more defects than the second carbon-based anode active material. Accordingly, lithium smoothly passes through the first anode active material layer such that part of the lithium precipitates on a surface of the second carbon-based anode active material, i.e., at or near the interface of the second anode active material layer and the anode current collector, and most of the lithium precipitates in the pores of the second anode active material layer. In this way, lithium movement may be facilitated so that lithium may precipitate within the second anode active material layer and/or between the anode current collector and the second anode active material layer.

When the area ratio ($A^1D/A^1G$) is less than the area ratio ($A^2D/A^2G$), the first anode active material layer has relatively higher crystallinity than the second anode active material layer. In this case, when the crystallinity of the first anode active material layer is higher than that of the second anode active material layer, lithium movement becomes relatively more difficult, and one may observe uneven lithium precipitation resulting in some precipitation of lithium between the first anode active material layer and the solid electrolyte. This, of course, is not desired for performance reasons.

The area ratio ($A^1D/A^1G$) is 2 or more, about 2 to about 5, about 2.2 to about 4.8, about 2.5 to about 4, about 2.7 to about 3.9, about 3 to about 3.8, or about 3.2 to about 3.7, and the area ratio ($A^2D/A^2G$) is less than 2, about 1 to about 1.9, about 1.1 to about 1.9, about 1.2 to about 1.9, about 1.22 to about 1.9, about 1.25 to about 1.9, about 1.26 to about 1.8, or about 1.26 to about 1.5.

The intensity ratio ($I^1D/I^1G$) of a D band peak to a G band peak of the first carbon-based anode active material is less than the intensity ratio ($I^2D/I^2G$) of a D band peak to a G band peak of the second carbon-based anode active material. The intensity ratio ($I^1D/I^1G$) of a D band peak to a G band peak of the first carbon-based anode active material is 0.98 or less, and the intensity ratio ($I^2D/I^2G$) of a D band peak to a G band peak of the second carbon-based anode active material is 1 or more. When the intensity ratio ($I^1D/I^1G$) and the intensity ratio ($1^2D/1^2G$) satisfy the above ranges, the crystallinity of the first carbon-based anode active material may be lower than that of the second carbon-based anode active material Moreover, the first carbon-based anode active material may have more defects than the second carbon-based anode active material, and lithium movement may be facilitated through the first carbon-based anode active material layer so that lithium precipitates within the second carbon-based anode active material layer and/or between the anode current collector and the second anode active material layer.

The intensity ratio ($I^1D/I^1G$) is, for example, about 0.95 to about 0.98, about 0.95 to about 0.97, or about 0.96 to about 0.97, and the intensity ratio ($I^2D/I^2G$) is 1 or more, about 1 to about 1.5, about 1 to about 1.4, about 1 to about 1.3, about 1 to about 1.2, or about 1 to about 1.15.

The position of a D band peak center in the Raman spectrum of the first carbon-based anode active material is blue-shifted by 15.0 cm$^{-1}$ or more, for example, about 17.0 cm$^{-1}$ to about 20.0 cm$^{-1}$ as compared to the position of a D band peak center in the Raman spectrum of the second carbon-based anode active material. Further, the width of the D band peak in the Raman spectrum of the first carbon-based anode active material is 2 times or more the width of the D band peak in the Raman spectrum of the second carbon-based anode active material, e.g., about 2 to about 4.5 times, about 2.5 times to about 4 times, about 2.5 times to about 3.8 times, or 2.75 times to about 3.78 times as large as the width of the D band peak in the Raman spectrum of the second carbon-based anode active material. The respective peak widths are measured at half height of the peak.

The content of oxygen in the first carbon-based anode active material and the second carbon-based anode active material, as obtained by XPS analysis, may be a content of oxygen existing on or near the surface of the first carbon-based anode active material and the surface of the second carbon-based anode active material. The oxygen in the first carbon-based anode active material and the second carbon-based anode active material may be oxygen in an oxygen-containing functional group.

Examples of the oxygen-containing functional group may include, but are not limited to, a hydroxyl group (-OH), a carboxyl group (-COOH), and a carbonyl group (-C(=O)-). The oxygen-containing functional group may be introduced on the surface of the first carbon-based anode active material and the surface of the second carbon-based anode active material. The oxygen-containing functional group may be linked to the first carbon-based anode active material and the second carbon-based anode active material, which are modified, for example, through a covalent bond.

The content of oxygen may be, for example, about 0.01 atomic% (hereinafter referred to as at%) to about 3 at%, about 0.03 at% to about 3 at%, about 0.05 at% to about 3 at%, about 0.07 at% to about 2.8 at%, about 0.1 at% to about 2.7 at%, about 0.1 at% to about 2.6 at%, or about 0.1 at% to about 2.5 at%. When the content of oxygen in the first carbon-based anode active material and the second carbon-based anode active material is more than 3 at%, the irreversibility of the first carbon-based anode active material and the second carbon-based anode active material increases, thereby making reversible charging and discharging of a solid secondary battery more difficult and causing the deterioration of cycle characteristics.

The content of oxygen in the first carbon-based anode active material, obtained by XPS analysis, is, for example, about 0.01 at% to 3 at%, about 2 at% to 3 at%, about 2.1 at% to about 2.8 at%, about 2.1 at% to about 2.5 at%, about 2.2 at% to about 2.5 at%, or about 2.23 at% to about 2.5 at%. The content of oxygen in the second carbon-based anode active material, obtained by XPS analysis, is, for example, about 0.01 at% to 3 at%, about 0.1 at% to 3 at%, about 0.2 at% to 3 at%, about 0.5 at% to 3 at%, about 0.5 at% to about 2.5 at%, or about 0.65 at% to about 2.25 at%.

The first carbon-based anode active material and the second carbon-based anode active material independently having the above-described oxygen contents may be obtained through high-temperature heat treatment, surface treatment, or a combination thereof, or may be manufactured according to the manufacturing method disclosed in Korean Patent Publication No. 2018-0035229A. The high-temperature heat treatment may be performed, for example, at about 1000 °C to about 1500 °C.

The porosity of the second anode active material layer may be controlled to a greater extent than the porosity of the first anode active material layer. The porosity of the second anode active material layer is about 40 volume percent (vol%) to about 80 vol%, and the porosity of the first anode active material layer is less than 40 vol%. When the porosity of the first anode active material layer and the porosity of the second anode active material layer are within the above ranges, lithium may easily pass through the first anode active material layer such that a surface of the second carbon-based anode active material of the second anode active material layer is partially lithiated, and most of the lithium precipitates within the pores of the second anode active material layer.

The porosity of the first anode active material layer is, for example, about 1 vol% to about 39 vol%, about 3 vol% to about 39 vol%, about 5 vol% to about 39 vol%, about 8 vol% to about 39 vol%, about 10 vol% to about 39 vol%, about 10 vol% to about 38 vol%, about 12 vol% to about 38 vol%, about 15 vol% to about 38 vol%, about 17 vol % to about 37 vol%, or about 20 vol% to about 37 vol%. The porosity of the second anode active material layer is, for example, about 40 vol% to about 75 vol%, about 40 vol% to about 73 vol%, about 40 vol% to about 70 vol%, about 40 vol% to about 65 vol%, about 41 vol% to about 65 vol%, about 41 vol% to about 55 vol%, or about 41 vol% to about 50 vol%. The total porosity of the first anode active material layer and the second anode active material layer is about 1 vol% to about 55 vol%, about 1 vol% to about 50 vol%, about 10 vol% to about 50 vol%, about 15 vol% to about 50 vol%, about 20 vol% to about 50 vol%, about 30 vol% to about 50 vol%, about 35 vol% to about 50 vol%, about 38 vol% to about 50 vol%, about 38 vol% to about 45 vol%, or about 38 vol% to about 43 vol%. As noted, the unit of porosity is volume %.

When the porosity of the first anode active material layer, the porosity of the second anode active material layer, and the total porosity of the first anode active material layer and the second anode active material layer are within the above ranges, lithium is primarily stored within the pores of the second anode active material layer, so that, during charging, a volume change decreases and there is no change in internal stress. Further, the first anode active material layer is positioned between the second anode active material layer and the solid electrolyte to facilitate uniform movement of lithium at the electrolyte/anode interface and suppress the growth of lithium dendrites, thereby enabling the manufacture of a solid secondary battery with improved high-rate, energy density, and lifespan characteristics.

The pore size of the second anode active material layer is greater than the pore size of the first anode active material layer. When the pore size of the second anode active material layer is greater than the pore size of the first anode active material layer, lithium may be easily deposited in the pores of the second anode active material layer, and lithium movement may easily occur, so that a lithium-precipitation layer may be formed between the anode current collector and the second anode active material layer.

According to an embodiment, the pore size of the second carbon-based anode active material of the second anode active material layer may be controlled to a greater extent than the pore size of the first carbon-based anode active material of the first anode active material layer.

The porosity and pore size of the first anode active material layer and the second anode active material layer are subjected to a pressurizing process during the process of manufacturing a solid secondary battery using the anode-solid electrolyte sub-assembly, and the relative porosity and pore size may be maintained.

The second anode active material layer may include, for example, a porous carbon structure or a non-porous hard carbon.

According to another embodiment, the second anode active material layer may include a porous carbon structure.

When the interparticle porosity of the second anode active material layer is at least 1% and less than 40% (% is volume %) and the second anode active material layer includes a porous carbon structure, the intraparticle porosity of the second anode active material layer is selected within a range that maintains the skeleton of the porous carbon structure, and is about 1 % to about 80 %, about 5 % to about 70 %, or about 10 % to about 56 %. The intraparticle porosity of the second anode active material layer may be interpreted in the same way as the intraparticle porosity of the porous carbon structure included in the second anode active material layer. When the porosity is within the above range, lithium may efficiently be stored in the intra-particle pores and inter-particle pores of the porous carbon structure during charging.

In the disclosure, porosity may be evaluated using pore volume or pore area by using image analysis using scanning electron microscope or may be determined by the following Equation 1.

$$\text{Equation 1}$$

$$\text{Porosity} = [1-(D/T)]*100$$

In Equation 1, D may denote a density of a layer to be measured, and a true density (T) may be the sum of true densities of all components constituting the layer to be measured.

According to another embodiment, porosity may be calculated from pore volume.

In the second anode active material layer according to an embodiment, the volume of the intraparticle pores (internal pores) of the porous carbon structure may be about 1 vol% to about 80 vol%, about 1 vol% to about 70 vol%, about 5 vol% to about 50 vol%, or about 5 vol% to about 30 vol%, and the volume of the interparticle pores of the porous carbon structure may be about 1 vol% to about 40 vol%, about 5 vol% to about 30 vol%, or about 10 vol% to about 25 vol%. When the volume of the intraparticle pores and the volume of the interparticle pores of the porous carbon structure are within such ranges, the lithium storage ability of the second anode active material layer may be improved, such that a change in volume of the second anode active material layer during charging may be reduced and a change in internal stress may be reduced.

Here, the volume of the inter-particle pores may be evaluated through SEM image analysis and may also be evaluated according to Equation 2 below.

volume of interparticle pores (vol%) = porosity (vol%) - volume of intraparticle pores (vol%)          Equation 2

The particle size of the porous carbon structure in the second anode active material layer may be greater than the particle size of the first carbon-based anode active material in the first anode active material layer. The particle size of the porous carbon structure in the second anode active material layer may be about 0.5 micrometers ($\mu$m) to about 10 $\mu$m, about 1 $\mu$m to about 10 $\mu$m, about 2 $\mu$m to about 8 $\mu$m, or about 3 $\mu$m to about 6 $\mu$m, and the particle size of the first carbon-based anode active material may be about 10 nm to about 200 nm, about 20 nm to about 180 nm, or about 30 nm to about 150 nm. When the particle size of the porous carbon structure of the second anode active material layer is smaller than the particle size of the first carbon-based anode active material, it becomes difficult to sufficiently function as a lithium host.

The particle size of the second carbon-based material of the second anode active material layer may be 10 $\mu$m or less or in a range of about 0.5 $\mu$m to about 10 $\mu$m, about 1 $\mu$m to about 10 $\mu$m, about 2 $\mu$m to about 9 $\mu$m, about 2 $\mu$m to about 8 $\mu$m, about 3 $\mu$m to about 7 $\mu$m, or about 3 $\mu$m to about 5 $\mu$m. The particle size of the first carbon-based material of the first anode active material layer may be about 10 nm to about 200 nm, about 20 nm to about 200 nm, about 20 nm to about 180 nm, about 25 nm to about 170 nm, about 30 nm to about 160 nm, or about 30 nm to about 150 nm.

In the second anode active material layer, the porous carbon structure may include a plurality of pores in the structure, the size of the intra-particle pores (internal pores) of the porous carbon structure may be 10 nm to about 200 nm, about 30 nm to about 150 nm, or about 90 nm to about 130 nm, and the size of the inter-particle pores of the porous carbon structure may be about 100 nm to about 1 $\mu$m, for example, about 100 nm to about 500 nm. Again, the pore size refers to an average pore size. When the intra-particle pores and inter-particle pores are within the above ranges, lithium storage ability may be improved, thereby reducing a change in volume during charging and reducing a change in internal stress.

The average pore size of the second anode active material layer may be about 50 nm to about 200 nm, about 50 nm to about 180 nm, about 55 nm to about 150 nm, about 60 nm to about 150 nm, about 60 nm to about 100 nm, or about 70 nm to about 90 nm. The pore size of the second anode active material layer may about 5 nm to about 2 $\mu$m, about 8 nm to about 1.9 $\mu$m, about 10 nm to about 1.8 $\mu$m, about 10 nm to about 1.6 $\mu$m, about 10 nm to about 1.5 $\mu$m, or about 10 nm to about 1.0 $\mu$m. When the pore size of the second anode active material layer is within the above range, lithium storage ability may be improved, thereby reducing a change in volume during charging and reducing a change in internal stress.

The average pore size of the first anode active material layer may be about 30 nm to about 200 nm, about 35 nm to about 200 nm, about 40 nm to about 200 nm, about 45 nm to about 200 nm, about 45 nm to about 100 nm, about 48 nm to about 100 nm, or about 50 nm to about 90 nm. The pore size of the first anode active material layer may about 5 nm to about 1 µm, about 8 nm to about 1 µm, about 10 nm to about 1 µm, or about 10 nm to about 500 nm. When the pore size of the first anode active material layer is within the above range, the growth of lithium dendrites may be suppressed by facilitating uniform movement of lithium.

According to an embodiment, there is provided a structure in which the second anode active material layer and the first anode active material layer are laminated to provide two layers on the anode current collector. According to such a structure, lithium smoothly passes through the first anode active material layer, is partially lithiated on a surface of the second carbon-based anode active material of the second anode active material layer with most of the lithiation occurring within the internal pores, i.e., the intraparticle pores and interparticle pores of the second carbon-based anode active material.

The second anode active material layer has greater porosity than the first anode active material layer, and lithium precipitates in the pores of the of the second carbon anode active material. In addition to lithium, lithium alloys may be deposited within the pores. In this way, internal stress changes may be reduced through lithium storage in the intraparticle pores and interparticle pores of the second anode active material layer, and high-rate characteristics may be improved through the smooth movement of lithium through the layer, e.g., an AgC layer. In this way, lithium is deposited in the pores of the anode active material layer, such that there is little or no change in volume and no change in internal stress during charging of the battery. Therefore, the pressure and uneven lithium precipitation occurring during charging and discharging are significantly reduced, thereby preventing the deterioration of lifespan of cells. In particular, stable lifespan characteristics may be secured even during charging and discharging at low pressure, for example, a pressure of 1 MPa or lower.

A solid secondary battery according to an embodiment may maintain initial lifespan characteristic of 80% or more, 80% to 98%, 90% to 98%, or 95% to 98%, for 200 cycles under low-pressure operation.

According to an embodiment, the solid secondary battery may have a cell tightening pressure lowered to 1 MPa or less, about 0.1 MPa to about 1 MPa, or about 0.15 MPa to about 1 MPa, thereby enabling the implementation of free-standing cells.

The second anode active material layer may include, for example, a micro-sized porous carbon structure as a lithium carrier. A first anode active material layer containing a first anode active material having a nano size is positioned on a second anode active material layer to form an anode, and the first anode active material may contain, for example, a carbon-based anode active material.

The first carbon-based anode active material and the second carbon-based anode active material may include hard carbon. In the disclosure, hard carbon refers to a low-crystalline non-graphite material.

The first anode active material layer may include a first carbon-based anode active material having an average particle diameter of about 10 nm to about 200 nm, and the second carbon-based anode active material may include, for example, a porous carbon structure or hard carbon having an average particle diameter of about 0.2 µm to about 10 µm.

The first anode active material layer and the second anode active material layer may each further include at least one metal or metalloid.

In a charged state of a battery in accordance with an embodiment, a lithium precipitation layer is provided between the second anode active material layer and the anode current collector. Further, lithium may precipitate into the pores of the second carbon-based anode active material.

In the anode-solid electrolyte sub-assembly according to an embodiment, lithium is stored in the intraparticle pores (internal pores) or interparticle pores of the second carbon-based anode active material of the second anode active material layer, and the first anode active material layer containing the nano-sized first carbon-based anode active material may facilitate the uniform movement of lithium to suppress the growth of lithium dendrites into the solid electrolyte. In the anode-solid electrolyte sub-assembly according to an embodiment, the anode may be a strain-free anode. When using such an anode, a solid secondary battery can be manufactured that may operate without changes in internal stress and have improved lifespan characteristics, especially when operating at low pressure.

The solid secondary battery according to an embodiment is, for example, an all-solid-state secondary battery.

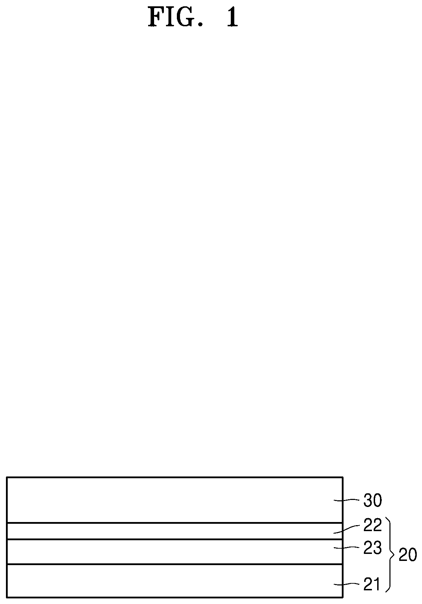

FIG. 1 is a cross-sectional view for explaining a structure of an anode-solid electrolyte sub-assembly according to an embodiment.

As shown in FIG. 1, the anode-solid electrolyte sub-assembly has a structure in which a solid electrolyte 30 is disposed on an anode 20. The anode 20 includes an anode current collector 21, a second anode active material layer 23 on the anode current collector 21, and a first anode active material layer 22 on the second anode active material layer 23. The first anode active material layer 22 includes a first element of at least one selected from a first metal anode active material or a first metalloid anode active material, and a first carbon-based anode active material. The second anode active material layer 23 includes i) only a second carbon-based anode active material or ii) a second carbon-based anode active material and a second element of at least one of a second metal anode active material or a second metalloid anode active material.

The interparticle porosity of the second anode active material layer is about 1% to about 40%, % is volume % (hereinafter referred to as vol%), and the intra-particle porosity of the second anode active material layer is selected within a range that maintains the skeleton of the porous carbon structure, and is about 40 vol% to about 80 vol%, about 40 vol% to about 70 vol%, or about 40 vol% to about 56 vol%. The intra-particle porosity of the second anode active material layer may be interpreted in the same way as the intra-particle porosity of the porous carbon structure included in the second anode active material layer. When the porosity is within the above range, lithium may be efficiently stored in the intra-particle pores and inter-particle pores of the porous carbon structure during charging.

The first element and the second element may independently include, for example, tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof, and specifically, may include gold (Au), platinum (Pt), palladium (Pd), silicon (Si), silver (Ag), aluminum (Al), bismuth (Bi), tin (Sn), zinc (Zn), or a combination thereof.

The first anode active material layer includes a first carbon-based anode active material and a first particle of at least one selected from a metal or metalloid anode active material, and the content of the first particle is about 1 wt% to about 60 wt%, based on the total weight of the first carbon-based anode active material and the first particle. Here, the first carbon-based anode active material and the first particle may form a composite.

The second anode active material layer includes a second carbon-based anode active material and a second particle of at least one selected from a metal or metalloid anode active material, and the content of the second particle is about 1 wt% to about 60 wt%, based on the total weight of the second carbon-based anode active material and the second particle. Here, the second carbon-based anode active material and the second particle may form a mixture or a composite.

According to an embodiment, the mixing weight ratio of the first carbon-based anode active material and the first particle in the first anode active material layer, and the mixing weight ratio of the second carbon-based anode active material and the second particle in the second anode active material layer, are independently about 1:1 to about 5:1, about 1:1 to about 4:1, or about 1:1 to about 3:1. When a battery has such a mixing weight ratio, lithium may move and/or precipitate into the intra-particle pores and inter-particle pores of the porous carbon structure of the second carbon-based anode active material during the charging and/or discharging of the battery.

The first carbon-based anode active material may act as a buffer layer capable of alleviating volume expansion due to lithium precipitation and desorption during charging and discharging, and may include, for example, amorphous carbon. Examples of the amorphous carbon include, but are not limited to, carbon black (CB), acetylene black (AB), furnace black (FB), ketjen black (KB), graphene, carbon nanotubes (CNTs), and carbon nanofibers (CNFs).

The second carbon-based anode active material of the second anode active material layer includes, for example, amorphous carbon, porous carbon, non-porous carbon, or a combination thereof. For example, the second carbon-based anode active material includes CB, AB, FB, KB, graphene, graphene oxide, reduced graphene oxide, carbon fiber, CNTs, carbon nanobelts, carbon paper, carbon sheet, carbon foam, or a combination thereof.

The second anode active material layer may include, for example, carbon fiber cloth, carbonized MOF (metal organic framework), carbonized porous MOF, graphene foam, CNFs, hollow carbon nanocubes, carbon core/shell array, porous carbon flakes, carbon rod array, 3D nanoporous graphene, crumpled graphene balls, graphene balls containing metal oxide particles, carbon granules, carbon fiber framework, carbon matrix, or a combination thereof.

In the second anode active material layer, the porous carbon structure is, for example, hard carbon among amorphous carbon. Hard carbon has more micropores and defects than crystalline graphite and amorphous soft carbon. Since hard carbon has many micropores and defects, it has excellent lithium storage capacity. The second anode active material layer includes porous carbon, ordered mesoporous carbon (OMC), a hybrid structure, a dual porous carbon structure, a mesoporous carbon structure, or a combination thereof.

The second anode active material layer includes, for example, a particle structure, a sheet structure, a paper structure, a non-woven fabric structure, a woven fabric structure, a foam structure, a mesh structure, or a combination thereof. For example, carbon paper made of a plurality of carbon fibers may include second pores arranged between the plurality of carbon fibers constituting the carbon paper. For example, a carbon sheet made of a plurality of hollow carbon fibers may include both first pores disposed within the hollow carbon fibers and second pores disposed between the plurality of hollow carbon fibers.

The thickness of the first anode active material layer is about 1 $\mu$m to about 20 $\mu$m, about 1 $\mu$m to about 10 $\mu$m, about 1 $\mu$m to about 9 $\mu$m, or about 2 $\mu$m to about 8 $\mu$m. The thickness of the second anode active material layer is about 1 $\mu$m to about 100 $\mu$m, about 1 $\mu$m to about 80 $\mu$m, about 5 $\mu$m to about 50 $\mu$m, about 10 $\mu$m to about 50 $\mu$m, or about 10 $\mu$m to about 30 $\mu$m. As used herein, thickness refers to average thickness. When the thicknesses of the first anode active material layer and the thickness of the second anode active material layer are within the above ranges, a solid secondary battery with improved lifespan characteristics during low-pressure operation can be manufactured.

The thickness of the second anode active material layer is formed to be greater than the thickness of the first anode active material layer, and a thickness ratio of the first anode active material layer and the second anode active material layer is, for example, about 1:1.1 to about 1:5, about 1:1.1 to about 1:4, or about 1:1.1 to about 1:3. At this thickness ratio, a solid secondary battery with improved lifespan characteristics during operation at low pressure can be manufactured. As used herein, thickness refers to average thickness.

The porous carbon structure according to an embodiment has at least one of the following characteristics.

The pore diameter of the porous carbon structure is about 10 nm to about 10,000 nm, and the total pore volume thereof is about 0.4 cm$^3$/g to about 2.8 cm$^3$/g. The pore volume of the porous carbon structure is about 0.4 cm$^3$/g to about 2.8 cm$^3$/g.

The specific surface area of the porous carbon structure is in a range of about 10 m$^2$/g to about 1000 m$^2$/g, about 20 m$^2$/g to about 1000 m$^2$/g, for example, about 20 m$^2$/g to about 900 m$^2$/g, for example, about 25 m$^2$/g to about 800 m$^2$/g.

The bulk density of the porous carbon structure is in a range of about 1.8 g/cm$^3$ to about 2.3 g/cm$^3$, about 0.13 g/cm$^3$ to about 2.25 g/cm$^3$, or about 1.85 g/cm$^3$ to about 2.2 g/cm$^3$.

The conductivity of the porous carbon structure is greater than 0.1 S/cm, and the pore diameter distribution is in a range of more than 50 nm and 280 nm or less, about 60 nm to about 270 nm, about 70 nm to about 260 nm, about 80 nm to about 250 nm, or about 90 nm to about 200 nm. When the pore diameter, total pore volume, pore volume, specific surface area, bulk density, conductivity, and the pore diameter distribution of the porous carbon structure are within the above ranges, lithium storage capacity may be improved, such that volume changes and internal stress changes during charging may be reduced.

The second anode active material layer may include amorphous carbon. The second anode active material layer may include, for example, hard carbon, and may have a form of secondary particle which is an aggregate of primary particles. Referring to this, it can be seen that the secondary particle has a form of an aggregate of multiple primary particles and that there are pores on the inside. The primary particle diameter (d50) is more than 500 nm and up to 100 $\mu$m. The primary particle diameter (d50) is about 300 nm to about 100 $\mu$m, about 400 nm to about 100 $\mu$m, or more than 500 nm and up to 100 $\mu$m.

The porous carbon structure is formed by a porous carbon material having a particle distribution D50 within a range of about 10 $\mu$m to about 250 $\mu$m, about 20 $\mu$m to about 220 $\mu$m, about 25 $\mu$m to about 200 $\mu$m, about 40 $\mu$m to about 160 $\mu$m, about 60 $\mu$m to about 130 $\mu$m, or about 70 $\mu$m to about 110 $\mu$m. In an embodiment, the porous carbon structure has a particle size D50 of greater than 10 $\mu$m, greater than 20 $\mu$m, greater than 25 $\mu$m, greater than 40 $\mu$m, greater than 50 $\mu$m, or greater than 60 $\mu$m.

Specifically, the porous carbon structure has a particle size D50 of less than 250 $\mu$m, less than 220 $\mu$m, less than 200 $\mu$m, less than 160 $\mu$m, less than 130 $\mu$m, or less than 110 $\mu$m. In some cases, the particle size D50 may be up to about 280 $\mu$m.

According to an embodiment, the D10 of the porous carbon structure is about 0.1 $\mu$m to about 0.4 $\mu$m, the D50 thereof is about 1.0 $\mu$m to about 1.8 $\mu$m, and the D90 thereof is about 3.0 $\mu$m to about 5 $\mu$m, the specific surface area of the porous carbon structure is about 83 m$^2$/g to about 600 m$^2$/g, the pore size of the porous carbon structure is about 90 nm to about 130 nm, about 90 nm to about 120 nm, about 10 nm to about 120 nm, for example, 110 nm, the pore volume of the porous carbon structure is about 0.25 cm$^3$/g to about 0.45 cm$^3$/g, about 0.28 cm$^3$/g to about 0.42 cm$^3$/g, about 0.3 cm$^3$/g to about 0.4 cm$^3$/g, or 0.35 cm$^3$/g, and the tap density of the porous carbon structure is about 0.2 g/cm$^3$ to about 0.22 g/cm$^3$.

As the porous carbon structure according to an embodiment, porous carbon disclosed in Korean Patent Nos. 10-2510548 and 10-2484569 may be used.

Although not shown, a third anode active material layer may be further disposed between the anode current collector 21 and the second anode active material layer 23 and/or between the first anode active material layer 22 and the solid electrolyte 30. This third anode active material layer has a thickness of about 0.1 nm to about 100 nm. When the third anode active material layer having such a thickness is formed, the charge/discharge characteristics of a solid secondary battery can be further improved.

The third anode active material layer may be, for example, a lithium thin film, a lithium alloy thin film, or a combination thereof.

The third anode active material layer may be further formed as a precipitation layer during the process of charging a solid secondary battery, the process of arrangement (for example, contacting, bonding) of the anode current collector onto the second anode active material layer, or both the processes.

Lithium alloy thin film includes lithium and an element capable of forming an alloy with lithium. The thickness of the third anode active material layer is, for example, about 1 nm to about 800 nm, about 10 nm to about 700 nm, about 50 nm to about 600 nm, or about 100 nm to about 500 nm. When the thickness thereof is too thick, the thin film itself absorbs lithium, which reduces the amount of lithium precipitation from the anode, thereby lowering the energy density of the solid secondary battery and deteriorating the cycle characteristics of the solid secondary battery. The third anode active material layer may be disposed on the anode current collector by, for example, a vacuum deposition method, a sputtering method, a plating method, or the like.

The second anode active material layer 23 may include a binder.

A lithium precipitation layer may be further included between the anode current collector 21 and the second anode active material layer 23.

The lithium precipitation layer may also be formed between the first anode active material layer 22 and the solid electrolyte 30.

In the second anode active material layer, after the solid secondary battery is charged, lithium metal, lithium alloy or a combination thereof may be provided in some or all of the pores. Lithium metal or lithium alloy may be accommodated in the pores included in the second anode active material layer, thereby suppressing the volume change of a lithium host layer during the charging/discharging process of a solid secondary battery. Therefore, the volume change of the anode, for example, the thickness change of the anode, is suppressed during the charging and discharging process of the solid secondary battery, the structural stability of the solid secondary battery can be improved, and as a result, deterioration of the solid secondary battery can be suppressed more effectively.

Additionally, the first anode active material layer may include lithium or a material that is alloyed with or forms a compound with lithium. Lithium precipitation formation stress can be controlled by using a material having ionic and electronic conductivity as a material for forming the first anode active material layer.

According to an embodiment, the first anode active material layer may include a material including a first carbon-based anode active material; a mixture of i) a carbon-based anode active material and ii) a first element of at least one selected from a first metal and a first metalloid; a composite of i) a carbon-based anode active material and ii) a first element of at least one of a first metal and a first metalloid.

The first anode active material layer may include, for example, a first carbon-based anode active material supported with a first element of at least one of a first metal and a first metalloid.

The first anode active material layer may include, for example, a first carbon-based anode active material and a first metal, a first metalloid, or a combination thereof.

A binder may be added to the first anode active material layer. Examples of the binder may include, but are not limited to, styrene butadiene rubber (SBR), polytetrafluoroethylene, polyvinylidene fluoride (PVDF), and polyethylene (PE). Any material may be used as long as the material may be used as a binder in the art. The content of the binder may be about 0.1 wt% to about 10 wt%, about 0.1 wt% to about 5 wt%, about 0.1 wt% to about 3 wt%, about 0.1 wt% to about 1 wt%, about 0.1 wt% to about 0.5 wt%, or about 0.1 wt% to about 0.3 wt% based on the total weight of the first anode active material layer.

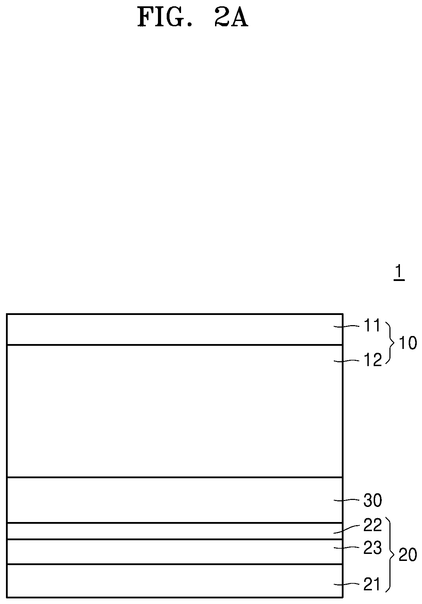

As shown in FIG. 2A, a solid secondary battery 1 according to an embodiment may have a structure in which a cathode 10 including a cathode active material layer 12 and a cathode current collector 11 is stacked on the solid electrolyte 30 of the anode-solid electrolyte sub-assembly of FIG. 1.

After charging, the pores of the second anode active material layer 23 may include a second metal material, and the second metal material may be lithium, a lithium-second metal (M2) alloy, or a combination thereof. Here, the particle size of the second metal material may be about 0.1 nm to about 200 nm.

The second metal (M2) material may be, for example, a second metal (M2) different from lithium, a lithium-second metal (M2) alloy, or a combination thereof, and the second metal (M2) may be a metal. The metal may include, for example, tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Ce), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof. The second metal may include, for example, at least one selected from Au, Pt, Pd, Si, Ag, Al, Bi, Sn, and Zn.

The second metal material may include a Li-Ag alloy, a Li-Au alloy, a Li-Al alloy, a Li-Sn alloy, a Li-In alloy, a Li-Zn alloy, a Li-Ge alloy, a Li-Si alloy, a Li-Sb alloy, a Li-Bi alloy, a Li-Ga alloy, a Li-Na alloy, a Li-K alloy, a Li-Te alloy, a Li-Mg alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li -Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li- Sn-Ba alloy, a Li-Sn-Au alloy, a Li-Sn-La alloy, a Li-Al-Ga alloy, a Li-Mg-Sn alloy, a Li-Mg-Al alloy, a Li-Mg-Si alloy, a Li-Mg -Zn alloy, a Li-Mg-Ga alloy, a Li-Mg-Ag alloy, or a combination thereof.

The first anode active material layer may serve as a protective layer which, even when lithium exceeds the support capacity of the second anode active material layer due to overcharge, prevents a lithium metal from coming into direct contact with a solid electrolyte. Lithium that precipitates after passing through the first anode active material layer may be guided to precipitate into the second anode active material layer, thereby effectively preventing deterioration due to a change in cell thickness or generation of internal pressure.

According to an embodiment, the internal stress change of the solid secondary battery is 0.2 MPa or less, or 0.1 MPa or less. According to another embodiment, the internal stress change of the solid secondary battery is about 0.001 MPa to about 0.2 MPa or about 0.001 MPa to about 0.1 MPa.

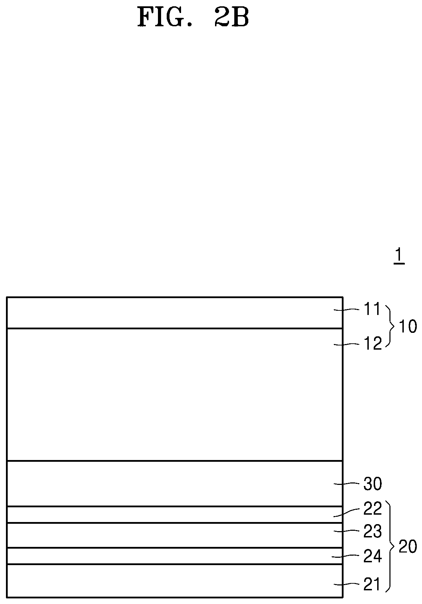

Referring to FIG. 2B, after charging, a lithium-precipitation layer 24 may be disposed between the anode current collector 21 and the second anode active material layer 23.

The first anode active material layer includes a type of anode active material selected from a carbon-based anode active material, a carbon-based anode active material and a first metal or first metalloid anode active material, or a mixture of a plurality of different anode active materials. For example, the first anode active material layer may include only amorphous carbon, or may include the above-described first metal or first metalloid. Alternatively, the first anode active material layer includes a composite of amorphous carbon and the above-described first metal or first metalloid anode active material. A composite ratio of a composite of amorphous carbon and a first metal or first metalloid anode active material, e.g., silver or the like may be a weight ratio, for example, in a range of about 10:1 to about 1:2, about 5:1 to about 1:1, or about 4:1 to about 2:1, but one or more embodiments are not necessarily limited to such a range. The composite ratio may be selected according to the required characteristics of a solid secondary battery. When the first anode active material layer has such a composition, the cycle characteristics of a solid secondary battery may be further improved.

The first anode active material layer includes a mixture of amorphous carbon and a first element including a first metal or a first metalloid. The mixture may be a simple resultant mixture of the amorphous carbon and the first element or a resultant mixture in which the amorphous carbon and the first element are collectively bound by a binder. The content of amorphous carbon is about 1 wt% to about 60 wt%, about 8 wt% to about 60 wt%, about 10 wt% to about 50 wt%, about 15 wt% to about 40 wt%, or about 20 wt% to about 30 wt%, based on the total weight of the mixture. When the amorphous carbon has a content in this range, the cycle characteristics of the solid secondary battery 1 are further improved.

The first anode active material layer includes i) a composite of amorphous carbon and first particles including a second metal or metalloid, or ii) a mixture of amorphous carbon and first particles including a first metal or first metalloid, and the content of the amorphous carbon is about 1 wt% to about 60 wt% based on the total weight of the composite or mixture.

The first anode active material layer may include, for example, a mixture of a carbon-based anode active material and silver (Ag), or a composite of a carbon-based anode active material, silver (Ag), and a binder.

The first anode active material layer includes a carbon-based anode active material, graphite, gold, silver, nickel, platinum, molybdenum, tungsten, stainless steel, lithium-Ag, carbon-Ag, or a combination thereof.

When the sub-assembly according to an embodiment is used, there is no need to use a buffering agent, and therefore, the energy density of a solid secondary battery may be increased. In contrast, in an anode-free solid secondary battery using a precipitation-type anode according to a related art, the presence of a buffering agent is necessarily required due to a significant change in thickness of a battery module, Moreover, in a sub-assembly according to an embodiment, pressure issues caused by precipitation of lithium formed in a cell and a battery may be addressed, and the lifespan characteristics of the battery during a low-pressure operation improved. Accordingly, in a stress-free anode, that is, zero stress, an inactive member may be used in an auxiliary pressure control member, and the inactive member having a thin thickness may be used or may not be used, thereby increasing an energy density.

For example, the first anode active material layer may include a lithium-free composite during battery assembly, but the lithium-free composite may be converted into a lithium-containing composite after pressing and/or after a charging of the battery.

According to another embodiment, in some cases, an anode current collector, a first anode active material layer, and a region therebetween may be a Li metal-free region not including a lithium (Li) metal in an initial state, or in a fully discharged state, of the battery assembly of the solid secondary battery.

A cathode 10 includes a cathode current collector 11 and a cathode active material layer 12. The cathode current collector 11 may be provided as a plate, foil, or the like including, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The cathode current collector 11 may include, for example, a base film and a metal layer disposed on one side or both sides of the base film. The base film may include, for example, a polymer. The polymer may include, for example, polyethylene terephthalate (PET), PE, polypropylene (PP), polybutylene terephthalate (PBT), polyimide (PI), or a combination thereof. The base film may be, for example, an insulator. The base film may include an insulating thermoplastic polymer, and thus when a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The metal layer may serve as an electrochemical fuse to be cut when an overcurrent occurs, thereby performing a short circuit prevention function. The thickness of the metal layer may be adjusted to adjust a limit current and a maximum current. The metal layer may be plated or deposited on the base film. When the thickness of the metal layer is decreased, a limit current and/or a maximum current of the cathode current collector 11 may be decreased, and thus the stability of a solid secondary battery during a short circuit may be improved.

A lead tab may be added onto the metal layer for external connection. The lead tab may be welded to the metal layer or a metal layer/base film stack through ultrasonic welding, laser welding, spot welding, or the like. For example, as the base film and/or the metal layer is melted during welding, the metal layer may be electrically connected to the lead tab. In order to more strongly weld the metal layer and the lead tab, metal chip may be added between the metal layer and the lead tab. The metal chip may be a flake including the same material as a metal of the metal layer. The metal chip may be, for example, metal foil or a metal mesh. The metal chip may be, for example, aluminum foil, copper foil, or SUS foil. The metal chip may be disposed on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer.

The thickness of the base film may be, for example, in a range of about 1 μm to μm 50 μm, about 1.5 μm to about 50 μm, about 1.5 μm to about 40 μm, or about 1 μm to about 30 μm. The base film may have a thickness in such a range, and thus a weight of an electrode assembly may be more effectively reduced. The melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab.

In order to improve adhesive strength between the base film and the metal layer, surface treatment such as corona treatment may be performed on the base film. The thickness of the metal layer may be, for example, in a range of about 0.01 μm to about 3 μm, about 0.1 μm to about 3 μm, about 0.1 μm to about 2 μm, or about 0.1 μm to about 1 μm. The metal layer may have a thickness in such a range, and thus the stability of an electrode assembly may be secured while conductivity is maintained. The thickness of the metal chip may be, for example, in a range of about 2 μm to about 10 μm, about 2 μm to about 7 μm, or about 4 μm to about 6 μm. The metal chip may have a thickness in such a range, and thus the metal layer and the lead tab may be more easily connected. Accordingly, a cathode current collector 11 with such a structure, a weight of an electrode may be reduced, thereby improving the energy density of a solid secondary battery.

The cathode active material layer 12 may include, for example, a cathode active material. The cathode active material may be a cathode active material that may reversibly adsorb and desorb lithium ions. Examples of the cathode active material may include a lithium transition metal oxide such as lithium cobalt oxide (LCO), lithium nickel oxide, lithium nickel cobalt oxide, lithium nickel cobalt aluminum oxide (NCA), lithium nickel cobalt manganate (NCM), lithium manganate, or lithium iron phosphate oxide, nickel sulfide, copper sulfide, iron oxide, vanadium oxide, lithium sulfide ($Li_2S$), a lithium sulfide composite, or the like, but one or more embodiments are not necessarily limited thereto. Any material may be used as long as the material may be used as a cathode active material in the art. Each of cathode active materials may be used alone, or a mixture of two or more types thereof may be used.

For example, the cathode active material may include a compound represented by any one of formulas of $Li_aA_{1-b}B_bD_2$, wherein $0.90 \leq a \leq 1$ and $0 \leq b \leq 0.5$; $Li_aE_{1-b}B_bO_{2-c}D_c$, wherein $0.90 \leq a \leq 1$, $0 \leq b \leq 0.5$, and $0 \leq c \leq 0.05$; $LiE_{2-b}B_bO_{4-c}D_c$; wherein $0 \leq b \leq 0.5$ and $0 \leq c \leq 0.05$; $Li_aNi_{1-b-c}Co_bB_cD_\alpha$, wherein $0.90 \leq a \leq 1$, $0 \leq b \leq 0.5$, $0 \leq c \leq 0.05$, and $O < \alpha \leq 2$; $Li_aNi_{1-b-c}Co_bB_cO_{2-\alpha}F_\alpha$, wherein $0.90 \leq a \leq 1$, $0 \leq b \leq 0.5$, $0 \leq c \leq 0.05$, and $0 < \alpha < 2$; $Li_aNi_{1-b-c}Co_bB_cO_{2-\alpha}F_2$, wherein $0.90 \leq a \leq 1$, $0 \leq b \leq 0.5$, $0 \leq c \leq 0.05$, and $0 < \alpha < 2$; $Li_aNi_{1-b-c}Mn_bB_cD_\alpha$, wherein $0.90 \leq a \leq 1$, $0 \leq b \leq 0.5$, $0 \leq c \leq 0.05$, and $O < \alpha \leq 2$; $Li_aNi_{1-b-c}Mn_bB_cO_{2-\alpha}F_\alpha$, wherein $0.90 \leq a \leq 1$, $0 \leq b \leq 0.5$, $0 \leq c \leq 0.05$, and $0 < \alpha < 2$; $Li_aNi_{1-b-c}Mn_bB_cO_{2-\alpha}F_2$, wherein $0.90 \leq a \leq 1$, $0 \leq b \leq 0.5$, $0 \leq c \leq 0.05$, and $0 < \alpha < 2$; $Li_aNi_bE_cG_dO_2$, wherein $0.90 \leq a \leq 1$, $0 \leq b \leq 0.9$, and $0 \leq c \leq 0.5$, and $0.001 \leq d \leq 0.1$; $Li_aNi_bCo_cMn_dG_eO_2$, wherein $0.90 \leq a \leq 1$, $0 \leq b \leq 0.9$, $0 \leq c \leq 0.5$, $0 \leq d \leq 0.5$, and $0.001 \leq e \leq 0.1$; $Li_aNiG_bO_2$, wherein $0.90 \leq a \leq 1$ and $0.001 \leq b \leq 0.1$; $Li_aCoG_bO_2$, wherein $0.90 \leq a \leq 1$ and $0.001 \leq b \leq 0.1$; $Li_aMnG_bO_2$, wherein $0.90 \leq a \leq 1$ and $0.001 \leq b \leq 0.1$; $Li_aMn_2G_bO_4$, wherein $0.90 \leq a \leq 1$ and $0.001 \leq b \leq 0.1$; $QO_2$; $QS_2$; $LiQS_2$; $V_2O_5$; $LiV_2O_5$; $LiIO_2$; $LiNiVO_4$; $Li_{(3-f)}J_2(PO_4)_3$, wherein $0 \leq f \leq 2$, $Li_{(3-f)}Fe_2(PO_4)_3$, wherein $0 \leq f \leq 2$, and $LiFePO_4$. In such compounds, A may be Ni, Co, Mn, or a combination thereof, B may be Al, Ni, Co, Mn, Cr, Fe, Mg, Sr, V, a rare earth element, or a combination thereof, D may be O, F, S, P, or a combination thereof, E may be Co, Mn, or a combination thereof, F may be F, S, P, or a combination thereof, G may be Al, Cr, Mn, Fe, Mg, La, Ce, Sr, V, or a combination thereof, Q may be Ti, Mo, Mn, or a combination thereof, I may be Cr, V, Fe, Sc, Y, or a combination thereof, and J may be V, Cr, Mn, Co, Ni, Cu, or a combination thereof.

A compound in which a coating layer is added to a surface of such a compound may also be used, and a mixture of the above compound and a compound in which a coating layer is added may also be used. The coating layer added to the surface of such a compound includes, for example, a coating element compound of an oxide, hydroxide, oxyhydroxide of the coating element, oxycarbonate of the coating element, or hydroxycarbonate of the coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. A method of forming a coating layer may be selected within a range that does not adversely affect the physical properties of a cathode active material. A coating method may include, for example, spray coating, dipping, or the like. A specific coating method may be well understood by those skilled in the art, and thus a detailed description thereof will be omitted.

The cathode active material may include, for example, a lithium transition metal oxide having a layered rock salt type structure among the above-described lithium transition metal oxides. The "layered rock salt type structure" may be, for example, a structure in which oxygen layers and metal atom layers are alternatively arrayed regularly in a direction of a [111] axis of a cubic rock salt type structure, thereby the respective atom layers form a two-dimensional plane. The "cubic rock salt type structure" refers to a NaCl type structure that is a type of a crystal structure, specifically a structure in which face-centered cubic (fcc) lattices respectively formed by cations and anions are shifted by half a ridge of each unit lattice. The lithium transition metal oxide having the layered rock salt structure may include, for example, a ternary lithium transition metal oxide such as $LiNi_xCo_yAl_zO_2$ (NCA) or $LiNi_xCo_yMn_zO_2$ (NCM), wherein $0 < x < 1$, $0 < y < 1$, $0 < z < 1$, and $x + y + z = 1$. When the cathode active material includes the ternary lithium transition metal oxide having a layered rock salt type structure, the energy density and thermal stability of a solid secondary battery may be further improved.

The cathode active material may be covered with a coating layer as described above. As the coating layer, any layer may be used as long as the layer is known as a coating layer for a cathode active material of a solid secondary battery. The coating layer may include, for example, $Li_2O$-$ZrO_2$ or the like.

When the cathode active material contains, for example, nickel (Ni) in a ternary lithium transition metal oxide such as NCA or NCM, the capacity density of a solid secondary battery may be increased, thereby reducing metal elution from the cathode active material in a charged state. As a result, the cycle characteristics of a solid secondary battery may be improved.

The shape of the cathode active material is, for example, a particle shape such as a spherical shape or an elliptical spherical shape. The particle diameter of the cathode active material is not particularly limited and is within a range applicable to a cathode active material of a solid secondary battery according to a related art. The content of the cathode active material of the cathode 10 is also not particularly limited and is within a range applicable to the cathode 10 of a solid secondary battery according to a related art.

In addition to the above-described cathode active material, the cathode 10 may further include additives such as a conductive agent, a binder, a filler, a dispersant, and an ion-conductive adjuvant. Such a conductive agent may include, for example, graphite, carbon black (CB), AB, KB, a carbon fiber, a metal powder, or the like. The binder may include, for example, SBR, polytetrafluoroethylene, PVDF, PE, or the like. As a coating agent, a dispersant, an ion-conductive adjuvant, and the like that may be mixed into the cathode 10, known materials generally used in electrodes of a solid secondary battery may be used.

The cathode 10 may further include a solid electrolyte. The solid electrolyte included in the cathode 10 may be similar to or different from a solid electrolyte included in the solid electrolyte 30.

Alternatively, the cathode 10 may be impregnated with a liquid electrolyte. The liquid electrolyte may include a lithium salt and at least one of an ionic liquid and a polymer ionic liquid. The liquid electrolyte may be non-volatile. The ionic liquid may refer to a salt in a liquid state at room temperature or a room-temperature molten salt that has a melting point at room temperature or less and consists of only ions. The ionic liquid may include one selected from compounds including a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazolium-based cation, and a mixture thereof, and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^{2-}$, $CF_3SO_3^-$, $(FSO_2)_2N^-$, $(C_2F_5SO_2)2N^-$, $(C_2F_5SO_2)(CF_3SO_2)N^-$, and $(CF_3SO_2)_2N^-$. The ionic liquid may include, for example, at least one selected from N-methyl-N-propylpyrrolidinium bis(trifluoromethanesulfonyl)imide, N-butyl-N-methylpyrrolidium bis(trifluoromethylsulfonyl)imide, 1-butyl-3-methylimidazolium bis(trifluoromethylsulfonyl)imide, and 1-ethyl-3-methylimidazolium bis(trifluoromethylsulfonyl)imide. The polymer ionic liquid may include a repeating unit including a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazolium-based cation, and a mixture thereof; and b) at least one anion selected from $BF_4^-$, $PF_6^-$, $AsF_6^-$ $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^{2-}$, $CF_3SO_3^-$, $(C_2F_5SO_2)_2N^-$, $(C_2F5SO_2)(CF_3SO_2)N^-$ $NO_3^-$, $Al_2Cl_7^-$, $(CF_3SO_2)_3C^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, and $(O(CF_3)_2C_2(CF_3)_2O)_2PO^-$. As the lithium salt, any material may be used as long as the material may be used as a lithium salt in the art. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, LiN, $LiN(C_xF_{2x+1}SO_2)(C_yF_{2y+1}SO_2)$, wherein x and y are each a natural number), LiCl, LiI, or a mixture thereof. The concentration of the lithium salt included in the liquid electrolyte may be in a range of about 0.1 M to about 5 M. The content of the liquid electrolyte impregnated into the cathode 10 may be in a range of about 0 parts by weight to about 100 parts by weight, about 0 parts by weight to about 50 parts by weight, about 0 parts by weight to about 30 parts by weight, about 0 parts by weight to about 20 parts by weight, about 0 parts by weight to about 10 parts by weight, or about 0 parts by weight to about 5 parts by weight with respect to 100 parts by weight of the cathode active material layer 12 that does not include a liquid electrolyte.

Anode-solid electrolyte sub-assembly

An anode-solid electrolyte sub-assembly 20 includes an anode current collector 21, a second anode active material layer 23, a first anode active material layer 22, and a solid electrolyte 30.

A surface of the solid electrolyte layer 30 may be disposed to face a cathode 10.

The solid electrolyte layer 30 may further include, for example, a solid electrolyte, a gel electrolyte, or a combination thereof. The solid electrolyte may be an oxide-based solid electrolyte, a sulfide-based solid electrolyte, a polymer solid electrolyte, or a combination thereof.

Examples of the sulfide-based solid electrolyte may include at least one selected from $Li_2S$-$P_2S_5$, $Li_2S$-$P_2S_5$-LiX, (wherein X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (wherein m and n are positive numbers, and Z is one of Ge, Zn and Ga), $Li_2S$-$GeS_2$, $Li_2S$-$SiS_2$-$Li_3PO_4$, $Li_2S$-$SiS_2$-$Li_pMO_q$, (wherein p and q are positive numbers, and M is one of P, Si, Ge, B, Al, Ga and In), $Li_{7-x}PS_{6-x}Cl_x$ (wherein $0{\leq}x{\leq}2$), $Li_{7-x}PS_{6-x}Br_x$ (wherein $0 < x{\leq}2$), and $Li_{7-x}PS_{6-x}I_x$ (wherein $0 < x{\leq}2$). The sulfide-based solid electrolyte is manufactured by processing starting material such as $Li_2S$ and $P_2S_5$ using a melting and rapid cooling method or a mechanical milling method. After the processing, heat treatment may be performed. The solid electrolyte may be an amorphous solid electrolyte, a crystalline solid electrolyte, or a mixture thereof. The solid electrolyte may be, for example, one of the above-described sulfide-based solid electrolyte materials including at least sulfur (S), phosphorus (P), and lithium (Li) as constituent elements. For example, the solid electrolyte may be a material including $Li_2S$-$P_2S_5$. When using a sulfide-based solid electrolyte material including $Li_2S$-$P_2S_5$ to form a solid electrolyte, the mixing molar ratio of $Li_2S$ and $P_2S_5$ may be in a range of $Li_2S$:$P_2S_5$ = 20:80 to 90:10, 25:75 to 90:10, 30:70 to 70:30, or 40:60 to 60:40.

The sulfide-based solid electrolyte may include, for example, an argyrodite type solid electrolyte represented by the following Formula 1.

$$\text{Formula 1} \qquad Li^+_{12-n-x}A^{n+}X^{2-}_{6-x}Y^-_x$$

In Formula 1, A is P, As, Ge, Ga, Sb, Si, Sn, Al, In, Ti, V, Nb, or Ta, X is S, Se, or Te, Y is Cl, Br, I, F, CN, OCN, SCN, or $N^3$, and $1{\leq}n{\leq}5$, $0{\leq}x{\leq}2$.

The sulfide-based solid electrolyte may be, for example, an argyrodite-type compound including at least one selected from $Li_{7-x}PS_{6-x}Cl_x$ ($0{\leq}x{\leq}2$), $Li_{7-x}PS_{6-x}Br_x$ ($0{\leq}x{\leq}2$), and $Li_{7-x}PS_{6-x}I_x$ ($0{\leq}x{\leq}2$). The sulfide-based solid electrolyte may be, for example, an argyrodite-type compound including at least one selected from $Li_6PS_5Cl$, $Li_6PS_5Br$, and $Li_6PS_5I$.

The density of the argyrodite-type solid electrolyte may be about 1.5 g/cc to about 2.0 g/cc. When the argyrodite-type solid electrolyte has a density of 1.5 g/cc or more, the internal resistance of an all-solid-state secondary battery can be reduced, and the penetration of a solid electrolyte layer by Li can be effectively suppressed.

The sulfide-based solid electrolyte may be an argyrodite-type compound including at least one selected from $Li_{7-x}PS_{6-x}Br_x$ ($0{\leq}x{\leq}2$), $Li_{7-x}PS_{6-x}Br_x$ ($0<x{\leq}2$), and $Li_{7-x}PS_{6-x}I_x$ ($0<x{\leq}2$). The sulfide-based solid electrolyte included in the solid electrolyte may be an argyrodite-type compound including at least one selected from $Li_6PS_5Cl$, $Li_6PS_5Br$, and $Li_6PS_5I$.

The sulfide-based solid electrolyte may be in the form of a powder or a molded product. The solid electrolyte in the form of a molded article may be in the form of, for example, a pellet, a sheet, a thin film, or the like, but embodiments are not necessarily limited thereto, and may have various forms depending on the intended use.

The oxide-based solid electrolyte may include $Li_{1+x+y}Al_xTi_{2-x}Si_yP_{3-y}O_{12}$ ($0<x<2$ and $0{\leq}y<3$), $BaTiO_3$, $Pb(Zr,Ti)O_3$ (PZT), $Pb_{1-x}La_xZr_{1-y}Ti_yO_3$(PLZT) ($0{\leq}x<1$ and $0{\leq}y<1$), $PB(Mg_3Nb_{2/3})O_3$-$PbTiO_3$(PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al, Ga)_x(Ti, Ge)_{2-x}Si_yP_{3-y}O_{12}$ ($0{\leq}x{\leq}1$ and $0{\leq}y{\leq}1$), $Li_xLa_yTiO_3$ ($0<x<2$ and $0<y<3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (M=Te, Nb, or Zr and $0{\leq}x{\leq}10$), or a combination thereof. The oxide-based solid electrolyte may be manufactured by sintering or the like.

The oxide-based solid electrolyte may be, for example, a garnet-type solid electrode selected from $Li_7La_3Zr_2O_{12}$ (LLZO) and $Li_{3+x}La_3Zr_{2-a}M_aO_{12}$ (LLZO doped with M), wherein M=Ga, W, Nb, Ta, or Al, $0<a<2$, and $0{\leq}x{\leq}10$.

The polymer solid electrolyte may, for example, include a mixture of a lithium salt and a polymer, or may include a polymer having an ion-conductive functional group. The polymer solid electrolyte may be, for example, a polymer electrolyte that is in a solid state at a temperature of about 25 °C and a pressure of about 1 atm. The polymer solid electrolytes may not include a liquid. The polymer solid electrolyte may include a polymer, and the polymer may include, for example, polyethylene oxide (PEO), PVDF, polyvinylidene fluoride-hexafluoropropylene (PVDF-HFP), a poly(styrene-b-ethylene oxide) (PS-PEO) block copolymer, poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methy Imethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, poly acetylene, NAFION™, AQUIVION®, FLEMION®, GORE™, ACIPLEX™, MORGANEO-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), lithium 9,10-diphenylanthracene-2-sulfonate ($DPASLi^+$), or a combination thereof, but one or more embodiments are not limited thereto. Any material may be used as long as the material may be used in a polymer electrolyte in the art.

As the lithium salt, any material may be used as long as the material is usable as a lithium salt in the art. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are each a natural number from 1 to 20), LiCl, Lil, or a mixture thereof.

The polymer included in the polymer solid electrolyte may be, for example, a compound including 10 or more, 20 or more, 50 or more, or 100 or more repeating units. The weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte may be, for example, a polymer gel electrolyte. The gel electrolyte may have a gel state without including a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C and a pressure of about 1 atm. The polymer gel electrolyte may have, for example, a gel state without including a liquid. The liquid electrolyte used in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt and an ionic liquid.

The polymer used in the polymer gel electrolyte may be selected from polymers used in a solid polymer electrolyte. The organic solvent may be selected from organic solvents used in a liquid electrolyte. The lithium salt may be selected from lithium salts used in a polymer solid electrolyte. An Ionic liquid is a salt that has a melting point below room temperature, is composed only of ions, and is liquid at room temperature or molten at room temperature.

The ionic liquid may include at least one compound including a) at least one cation selected from ammonium-based cations, pyrrolidinium-based cations, pyridinium-based cations, pyrimidinium-based cations, imidazolium-based cations, piperidinium-based cations, pyrazolium-based cations, oxazolium-based cations, pyridazinium-based cations, phosphonium-based cations, sulfonium-based cations, triazolium-based cations, and mixtures thereof and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The polymer solid electrolyte may be impregnated into a liquid electrolyte in a secondary battery to form a polymer gel electrolyte. The polymer gel electrolyte may further include inorganic particles.

The polymer included in the polymer gel electrolyte may be a compound including 10 or more, 20 or more, 50 or more, or 100 or more repeating units. The weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

As shown in FIG. 2b, the solid electrolyte layer 30 may further include, for example, a binder. The binder included in the solid electrolyte layer 30 may include, for example, SBR, polytetrafluoroethylene, PVDF, PE, or the like, but one or more embodiments are not limited thereto. Any material may be used as long as the material may be used as a binder in the art. The binder of the solid electrolyte layer 30 may be the same as or different from binders of the cathode active material layer 12 and the second anode active material layer 23.

In the anode-solid electrolyte sub-assembly 20, the anode current collector 21 may include, for example, a material that does not react with lithium, that is, a material that does not form both an alloy and a compound together with lithium. The material constituting the anode current collector 21 may include, for example, copper (Cu), stainless steel, titanium (Ti), iron (Fe), cobalt (Co), and nickel (Ni), but one or more embodiments are not necessarily limited thereto. Any material may be used as long as the material may be used as an electrode current collector in the art. The anode current collector 21 may include one type among the above-described metals or an alloy or coating material of two or more types of metals. The anode current collector 21 may be in the form of a plate or foil.

The solid secondary battery according to an embodiment is an all-solid-state secondary battery that uses an anode in which lithium precipitates. For example, the solid secondary battery according to an embodiment is an all-solid-state secondary battery that uses a sulfide-based solid electrolyte as the solid electrolyte.

Although not shown in the drawings, the anode current collector 21 may include, for example, a base film and a metal layer disposed on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. The base film may include an insulating thermoplastic polymer, so that, when a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. The base film, metal layer, metal chip, and lead tab of the anode current collector 21 may be defined as for the above-described cathode current collector 11. The anode current collector 21 may have such a structure, a weight of an anode may be reduced, thereby improving the energy density of a solid secondary battery.

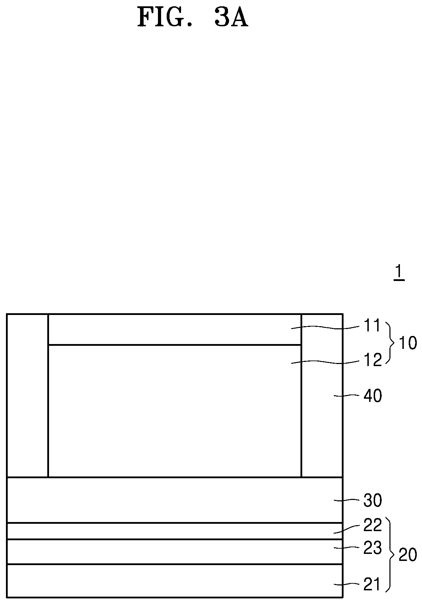

Referring to FIG. 3A, a cathode 10 may include a cathode current collector 11 and a cathode active material layer 12 disposed on one side of the cathode current collector 11.

A first inactive member 40 is disposed on side surface of the cathode 10. Referring to FIG. 3A, the first inactive member 40 may be disposed on one surface of each of the cathode active material layer 12 and the cathode current collector 11. The first inactive member 40 may be disposed on side surface of the cathode active material layer 12 and may be disposed between the solid electrolyte layer 30 and the cathode current collector 11 opposite to the solid electrolyte layer 30. The first inactive member 40 may not be disposed on side surface of the cathode current collector 11.

The first inactive member 40 may be included to prevent cracks of the solid electrolyte layer 30 during manufacturing and/or charging/discharging of a solid secondary battery 1, thereby improving the cycle characteristics of the solid secondary battery 1. In a solid secondary battery 1 that does not include the first inactive member 40, non-uniform pressure may be applied to the solid electrolyte layer 30 in contact with the cathode 10 during manufacturing and/or charging/discharging of the solid secondary battery 1. The non-uniform pressure may cause cracks to form in the solid electrolyte layer 30, and a lithium metal may grow through the cracks to increase a possibility of the occurrence of a short circuit, and consequent deterioration of the battery.

The first inactive member 40 may surround a side surface of the cathode 10 and may be in contact with the solid electrolyte layer 30, thereby effectively suppressing cracks of the solid electrolyte layer 30, e.g., in a portion of the solid electrolyte layer 30 that is not in contact with the cathode 10, which may result from a pressure differential during a pressing process. The first inactive member 40 may surround a side surface of the cathode 10 and be separated from an anode 20, for example, a first anode active material layer 22. The first inactive member 40 suppresses the possibility of a short circuit occurring due to physical contact between the cathode 10 and the first anode active material layer 22 or a possibility of a short circuit occurring due to the overcharging of lithium

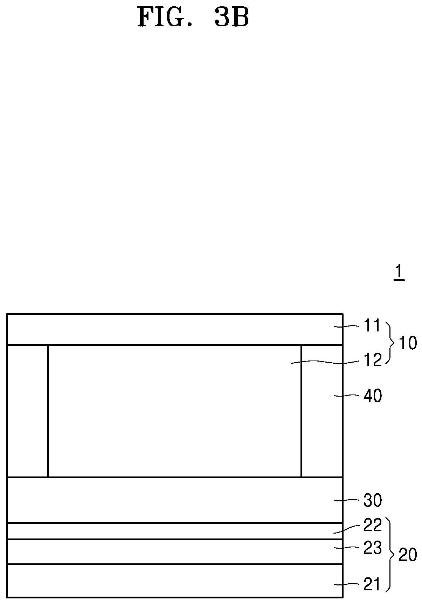

Referring to FIG. 3B, the first inactive member 40 may extend from one side surface of the cathode active material layer 12 to an end portion of the solid electrolyte layer 30so that cracks occurring at the end portion of the solid electrolyte 30 may be suppressed. The end portion of the solid electrolyte layer 30 is the outermost portion of the solid electrolyte layer 30. The first inactive member 40 may extend to the outermost portion of a side surface of the solid electrolyte layer 30. The first inactive member 40 may extend to the end portion of the solid electrolyte layer 30 but may not contact the anode 20. For example, the first inactive member 40 may fill a space extending from one side surface of the cathode 10 to the end portion of the solid electrolyte layer 30.

In the disclosure, "equal" area, length, width, thickness, and/or shape may include all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than 3 %, e.g., less than 2 %, less than 1 %, less than 0.5 %, or less than 0.1 %.

The thickness of the first inactive member 40 may be greater than the thickness of the first anode active material layer 22. The thickness of the first anode active material layer 22 may be, for example, 50 % or less, 40 % or less, 30 % or less, 20 % or less, or 10 % or less than the thickness of the first inactive member 40. The thickness of the first anode active material layer 22 may be, for example, about 1 % to about 50 %, about 1 % to about 40 %, about 1 % to about 30 %, about 1 % to about 20 %, or about 1 % to about 10 % of the thickness of the first inactive member 40.

The first inactive member 40 may be a gasket to suppress cracks of the solid electrolyte 30 caused by a pressure differential during a pressing process, i.e., the making of the battery.

The first inactive member 40 may have, for example, a single-layer structure. Alternatively, although not shown in the drawings, the inactive member 40 may have a multi-layer structure. In a first inactive member 40 having a multi-layer structure, two or more layers have different compositions. The first inactive member 40 having the multi-layer structure may be, for example, a two-layer structure, a three-layer structure, a four-layer structure, or a five-layer structure. The first inactive member 40 having a multi-layer structure may include, for example, one or more adhesive layers and one or more support layers. For example, the adhesive layer may effectively prevent separation between the cathode 10 and the solid electrolyte 30 due to a change in volume of the cathode 10 that occurs during a charging/discharging process of the solid secondary battery 1 and may also provide a binding (adhesive) force between the first inactive members 40 and other layers to improve the film strength of the first inactive member 40. The support layer may provide a supporting force to the first inactive member 40, may prevent or minimize the non-uniformity of pressure applied to the solid electrolyte layer 30 during a pressing process or a charging/discharging process, and may prevent the shape deformation of the solid secondary battery 1.

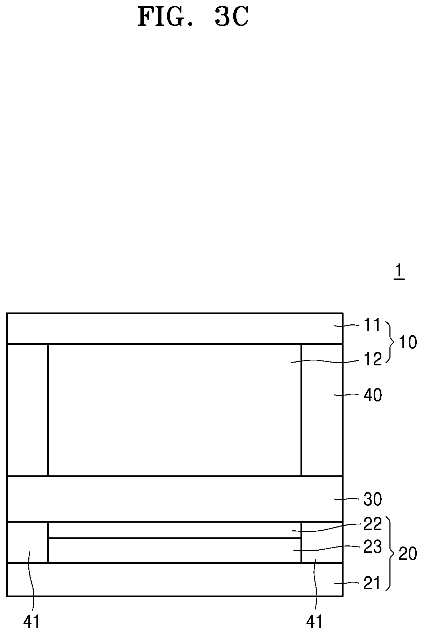

Referring to FIG. 3C, an anode 20 may include an anode current collector 21, a second anode active material layer 23 which is a lithium host layer disposed on one surface of the anode current collector 21, and a first anode active material layer 22. A second inactive member 41 may be disposed on one or both side surface(s) of the anode 20.

The second inactive member 41 may be disposed on one or both side surface(s) of each of the second anode active material layer 23 and the first anode active material layer 22, and may be disposed between a solid electrolyte layer 30 and the anode current collector 21 opposite to the solid electrolyte layer 30. The second inactive member 41 may be disposed on one or both side surface(s) of the second anode active material layer 23, one or both side surface(s) of the first anode active material layer 22, and one or both side surface(s) of the anode current collector 21. The second inactive member 41 may be included to more effectively prevent a short circuit between a lithium metal precipitated in the second anode active material layer 23 and a cathode 10 during charging/discharging of a solid secondary battery 1, thereby improving the cycle characteristics of the solid secondary battery 1. The second inactive member 41 may be included to prevent cracks of the solid electrolyte layer 30 during manufacturing and/or charging/discharging of the solid secondary battery 1, thereby improving the cycle characteristics of the solid secondary battery 1. In the solid secondary battery 1 that does not include the second inactive member 41, non-uniform pressure may be applied to the solid electrolyte layer 30 in contact with the anode 20 during manufacturing and/or charging/discharging of the solid secondary battery 1 resulting in cracks in the solid electrolyte layer 30. In the presence of such cracks, lithium metal may form or migrate through the cracks to increase a possibility of the occurrence of a short circuit.

The solid secondary battery 1 may include only the second inactive member 41 without the first inactive member 40.

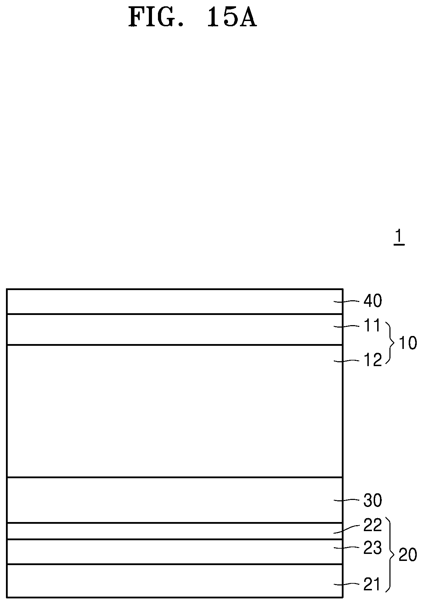

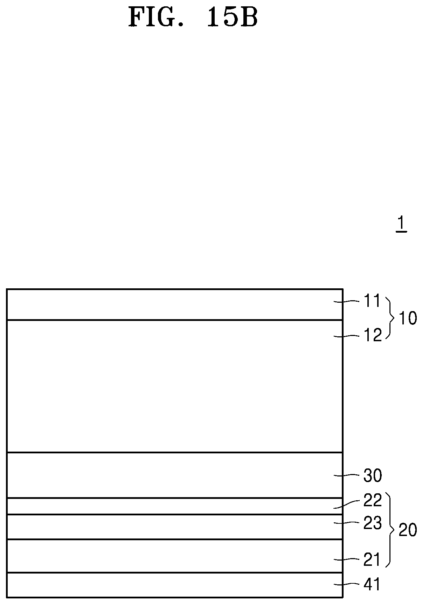

Referring to FIG. 15A, a first inactive member 40 may be disposed on a cathode current collector 11. A second inactive member 41 may be positioned on an anode current collector 21 as shown in FIG. 15B.

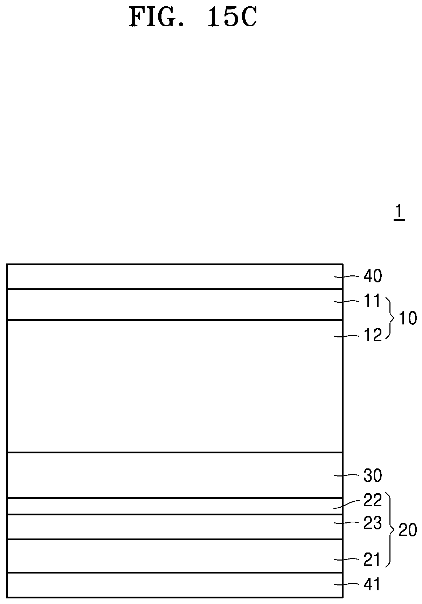

In addition, as shown in FIG. 15C, a solid secondary battery according to another embodiment may have a structure in which a first inactive member 40 is disposed on a cathode current collector 11, and a second inactive member 41 is disposed on an anode current collector 21.

Hereinafter, a method of manufacturing a solid secondary battery according to an embodiment will be described as follows.

A solid secondary battery may be manufactured through a method of manufacturing a solid secondary battery, the method including: coating a surface of an anode current collector with a composition for forming a second anode active material layer that includes a second carbon-based anode active material and drying the composition to form a second anode active material layer in contact with a surface of the anode current collector; coating the second anode active material layer with a composition for forming a first anode active material layer that includes a first carbon-based anode active material, and drying the composition to form a first anode active material layer; providing a solid electrolyte on the first anode active material layer to provide an anode-solid electrolyte sub-assembly; and providing a cathode on the solid electrolyte of the anode-solid electrolyte sub-assembly to provide a battery assembly for the solid secondary battery.

The composition for the second anode active material layer further includes at least one selected from a second metal or second metalloid anode active material. and optionally a binder.

An exemplary solid electrolyte may be a sulfide-based solid electrolyte.

The first anode active material layer may be formed by coating a surface of second anode active material layer with the composition for forming the first anode active material layer including i) a first carbon-based anode active material, or ii) a first carbon-based anode active material and, a second metal (M2) anode active material, a second metalloid anode active material, or a combination thereof, and then drying the composition.

According to another embodiment, the first anode active material layer may be prepared by coating a first substrate with a composition for forming the first anode active material layer and then drying the composition, arranging the coated substrate such that a surface of first anode active material layer is in contact with a surface of the second anode active material layer, and separating the first substrate from the first anode active material layer.

The first substrate may include a material that does not react with lithium, that is, a material that does not form both an alloy and a compound together with lithium. The material constituting the first substrate may include, for example, copper (Cu), stainless steel, titanium (Ti), iron (Fe), cobalt (Co), and nickel (Ni), but one or more embodiments are not necessarily limited thereto. Any material may be used as long as the material may be used as an electrode current collector in the art. The first substrate may include one type of the above-described metals or an alloy or coating material of two or more types of metals. The first substrate may be in the form of a plate or foil. The first substrate may be a stainless steel substrate.

The method may further include providing a third anode active material layer between the first anode active material layer and the solid electrolyte. The third anode active material layer may be, for example, a metal thin film.

The thickness of the third anode active material layer may be, for example, about 1 nm to about 800 nm, about 10 nm to about 700 nm, about 50 nm to about 600 nm, or about 100 nm to about 500 nm. When the thickness thereof is within the above ranges, a solid secondary battery with improved cycle characteristics can be manufactured without a decrease in the energy density of the solid secondary battery because the thin film itself absorbs lithium, thereby reducing the amount of lithium precipitation from the anode. The third anode active material layer may be disposed on the anode current collector by, for example, a vacuum deposition method, a sputtering method, a plating method, or the like.

When the solid secondary battery is manufactured, the arranging (for example, bonding) may be performed through a press-compressing process. During a pressing process, some lithium may be injected into the first anode active material layer. Accordingly, the first anode active material layer may include a composite including a carbon-based active material and lithium or a lithium-second metal (M2) alloy.

According to another embodiment, a lithium metal or a lithium metal alloy may precipitate in pores of the porous carbon structure included in the second anode active material layer during charging, or by the arranging of the solid secondary battery.

The pressure applied during pressing or compressing may be, for example, 150 MPa or more. The pressure applied during the pressing may be, for example, 250 MPa or more. The pressure applied during the pressing or compressing may be, for example, 1,000 MPa or less, or for example, in a range of about 150 MPa to about 10,000 MPa, about 300 MPa to about 5,000 MPa, or about 500 MPa to about 2,000 MPa.

According to another embodiment, the pressure may be about 50 MPa to about 750 MPa.

The time for which the pressure is applied is varied depending on a pressure range, and may be less than 1 hour, less than 50 minutes, less than 30 minutes, or less than 10 minutes.

The pressing may be performed, for example, at room temperature (25 °C). For example, the pressing may be performed at a temperature of about 15 °C to about 25 °C. However, the pressing temperature is not necessarily limited thereto, and may be about 25 °C to about 90 °C or may be a high temperature of 100 °C or more, for example, about 100 °C to about 500 °C.

The pressing may be, for example, roll pressing, uniaxial pressing, flat pressing, warm isostatic pressing (WIP), cold isostatic pressing (CIP), or the like, but one or more embodiments are not necessarily limited to such methods. Any pressing may be used as long as the pressing may be used in the art.

In the charging, the arranging, or both the charging and the arranging of the solid secondary battery, the second metal may form an alloy together with lithium in the second anode active material layer.

Preparation of cathode

A slurry is prepared by adding a cathode active material, a binder, and the like, which are materials constituting a cathode active material layer 12, to a non-polar solvent. The prepared slurry is applied onto a cathode current collector 11 and dried to obtain a stack structure. The stack structure is pressed to prepare a cathode 10. The pressing may be, for example, roll pressing, flat pressing, pressing using hydrostatic pressure, or the like, but one or more embodiments are not necessarily limited to such methods. Any pressing used in the art may be used. The pressing process may be omitted. A mixture of materials constituting the cathode active material layer 12 is compressed into the form of a pellet or stretched (molded) in the form of sheet to manufacture the cathode 10. When the cathode 10 is manufactured in such a manner, the cathode current collector 11 may be omitted. Alternatively, the cathode 10 may be used by being impregnated with an electrolyte solution.

Manufacturing of solid secondary battery

The anode-solid electrolyte assembly and the cathode 10 manufactured may be stacked and then pressed to manufacture a solid secondary battery.

The pressing may be, for example, roll pressing, uniaxial pressing, flat pressing, WIP, CIP, or the like, but one or more embodiments are not necessarily limited to such methods. Any pressing used in the art may be used. The pressure applied during the pressing is, for example, about 50 MPa to about 750 MPa. The time for which the pressure is applied is about 5 s to about 5 min. The pressing may be performed at a temperature in a range of room temperature to about 90 °C, or about 20 °C to about 90 °C. Alternatively, the pressing may be performed at a high temperature of 100 °C or more.

Next, the cathode 10 is disposed on the other surface of the solid electrolyte 30 to which the anode 20 is bonded and pressed at a certain pressure to arrange, for example, bond the cathode 10 on the other surface of the solid electrolyte 30. Alternatively, in the case of the cathode 10 impregnated with a liquid electrolyte, a battery may be manufactured through stacking without pressing.

The pressing may be, for example, roll pressing, uniaxial pressing, flat pressing, WIP, CIP, or the like, but one or more embodiments are not necessarily limited to such methods. Any pressing may be used as long as the pressing may be used in the art. The pressure applied during the pressing is, for example, about 50 MPa to about 750 MPa. The time for which the pressure is applied is about 5 s to about 5 min. The pressing may be performed at a temperature in a range of room temperature to about 90 °C, or about 20 °C to about 90 °C. Alternatively, the pressing may be performed at a high temperature of 100 °C or more.

According to another embodiment, there may be provided a battery that is a battery including a cathode and an anode-solid electrolyte sub-assembly disposed on the cathode, wherein the solid electrolyte of the anode-solid electrolyte sub-assembly is disposed between the cathode and an anode.

The cathode may include a liquid electrolyte. The anode-solid electrolyte sub-assembly may be the same as the above-described anode-solid electrolyte sub-assembly for a solid battery.

The present inventive ideas will be described in more detail through the following Examples and Comparative Examples. However, Examples are for illustrative purposes only, and the scope of the present inventive ideas is not limited by Examples.

Manufacturing of anode-solid electrolyte sub-assembly and solid secondary battery Example 1: Anode current collector/Second anode active material layer (AL2) (porous carbon/AgNP)/First anode active material layer (AL1) (AgC layer)/Solid electrolyte/Cathode [A$^1$(D)/A$^1$(G) > A$^2$(D)/A$^2$(G), Oxygen content of AL1 and AL2 < 3 at%, Porosity of AL1 < Porosity of AL2]

Preparation of anode-solid electrolyte sub-assembly

Porous carbon (Porocarb L1104 manufactured by Heraeus Battery Technology) as a second carbon-based anode active material and silver (Ag) nanoparticles (average particle diameter: 60 nm (0.06 $\mu$m)) were mixed at a weight ratio of 3g:1g. To this mixture was added 2.692 g of a PVDF binder solution (Solef 5130 manufactured by Solvay Specialty Polymers) and 7 g of N-methyl-2-pyrrolidone (NMP). The resulting mixture was stirred at a speed of 1,000 rpm for 30 minutes to prepare a slurry.

The porous carbon has a modal pore size of about 110 nm, a pore volume of 0.35 centimeter cubed per gram (cm$^3$/g), a bulk density of about 150 grams per cubic decimeter (g/dm$^3$), a specific surface area of 600 square meter per gram (m$^2$/g), a D10 of 0.3 micrometers ($\mu$m), a D90 of 3.0 $\mu$m, and a D50 of 1.0 $\mu$m. As used herein, a pore size refers to an average pore diameter.

The slurry was applied onto a SUS current collector (thickness: 10 $\mu$m), dried at room temperature (25 °C) for 1 hour, and then vacuum-dried in a vacuum oven at a temperature of 120 °C for 2 hours to prepare a second anode active material layer including a porous carbon structure and having a thickness of about 22.9 $\mu$m. Accordingly, a stacked structure including the anode current collector and the second anode active material layer was prepared.

3 g of carbon black (CB) (furnace black (FB-B) particles) with an average particle diameter of about 38 nm as a first carbon-based anode active material and 1 g of silver (Ag) particles with an average particle diameter of about 60 nm (0.06 $\mu$m) were mixed. To this mixture, was added 2.692 g of PVDF (Solef 5130 manufactured by Solvay Specialty Polymers) and 7 g of NMP. The resulting mixture was stirred at a speed of 1,000 rpm for 30 minutes to prepare a slurry. The slurry was applied onto the second anode active material layer of the above stacked structure including the anode current collector, dried at room temperature (25 °C) for 1 hour, vacuum-dried in a vacuum oven at a temperature of 120 °C for 2 hours, and then vacuum-dried at 80 °C for 30 minutes to provide a first anode active material layer having a thickness of 5.8 $\mu$m. Together the anode current collector, the second anode active material layer, and first anode active material layer, form an anode. In the anode, a thickness ratio of the first anode active material layer to the second anode active material layer is 1:3.9.

A 600 $\mu$m-thick pellet including a Li$_6$PS$_5$Cl sulfide-based solid electrolyte was used as a solid electrolyte.

The solid electrolyte was provided on the first anode active material layer to form an anode-solid electrolyte sub-assembly. A volume of pores in the anode-solid electrolyte sub-assembly was controlled according to a cathode capacity.

In Example 1, the capacity of the positive electrode is 3.5 mAh/cm2, and the positive electrode capacity corresponds to the areal capacity. Depending on the capacity of the positive electrode, the volume of pores in the negative electrode-solid electrolyte sub-assembly can be controlled by changing the material constituting the negative electrode (e.g., changing to a material with a different porosity) or by controlling the density of the negative electrode by adjusting the negative electrode pressing conditions.

Preparation of Cathode

LiNi$_{0.7}$Co$_{0.15}$Al$_{0.15}$O$_2$ (NCA) (D50=12 $\mu$m) as a cathode active material, CNFs as a conductive material, and Li$_6$PS$_5$Cl (D$_{50}$=5 $\mu$m) as a solid electrolyte were mixed, and then xylene was added to prepare a cathode slurry. The cathode slurry was molded into a form of a sheet to prepare a cathode sheet. A mixing weight ratio of the cathode active material: the conductive material: the sulfide-based solid electrolyte was 85:1:14. The cathode sheet had a thickness of 60 $\mu$m and was used as a cathode.

Manufacturing of solid secondary battery

The solid electrolyte of the anode-solid electrolyte sub-assembly was disposed on the cathode and pressed at a temperature of 80 °C and a pressure of 500 MPa for 30 minutes by using a warm isostatic press (WIP) to manufacture a solid secondary battery. The pressurized stack was placed into a pouch and vacuum-sealed to manufacture an all-solid-state secondary battery. Part of the cathode current collector and part of the anode current collector were extended outside the sealed all-solid-state secondary battery and were used as a positive terminal and a negative terminal, respectively.

The all-solid-state secondary battery was placed between pressing jigs and pressed at a pressure of 1 MPa (tightening pressure).

Example 2: Anode current collector/Second anode active material layer (AL2) (porous carbon/AgNP)/First anode active material layer (AL1) (AgC layer)/Solid electrolyte/Cathode [A$^1$(D)/A$^1$(G) > A$^2$(D)/A$^2$(G), Oxygen content of AL1 and AL2 <3 at%, Porosity of AL1 < Porosity of AL2]

An anode-solid electrolyte sub-assembly and a solid secondary battery were manufactured in the same manner as in Example 1, except for a difference in the slurry for forming a second anode active material layer. The second anode active material was prepared with porous carbon (Porocarb L1804) having characteristics shown in Table 1 instead of the porous carbon (Porocarb L1104 manufactured by Heraeus Battery Technology) of Example 1.

The porous carbon has a modal pore size of about 110 $\mu$m, a pore volume of 0.35 cm$^3$/g, a bulk density of about 150 g/dm$^3$, a tap density of 200 g/dm$^3$, a specific surface area of 83 m$^2$/g, a D10 of 0.3 $\mu$m, a D90 of 4.5 $\mu$m, a D50 of 4.5 $\mu$m, an ash content of less than 0.1 wt%, an iron content of less than 15 ppm, a nickel content of less than 10 ppm, and a zinc content of less than 5 ppm. In Example 2, the capacity of the cathode is 3.5 mAh/cm$^2$.

Example 3: Anode current collector/Second anode active material layer (AL2) (porous carbon/AgNP)/First anode active material layer (AL2) (AgC layer)/Solid electrolyte/Cathode [A$^1$(D)/A$^1$(G) > A$^2$(D)/A$^2$(G), Oxygen content of AL1 and AL2 < 3 at%, Porosity of AL1 < Porosity of AL2]

An anode-solid electrolyte sub-assembly and a solid secondary battery were manufactured in the same manner as in Example 1, except for a difference in the slurry for forming a second anode active material layer. The second anode active material was prepared with porous carbon having characteristics shown in Table 1 instead of the porous carbon (Porocarb L1104 manufactured by Heraeus Battery Technology) of Example 1. In Example 3, the capacity of the cathode is 3.5 mAh/cm$^2$.

Example 4

An anode-solid electrolyte sub-assembly and a solid secondary battery were manufactured in the same manner as in Example 1, except for a difference in the second anode active material. The second anode active material including non-porous hard carbon (average particle diameter: 1 $\mu$m) was used instead of the porous carbon (Porocarb L1104 manufactured by Heraeus Battery Technology) of Example 1.

In Examples 1, 2, 3, and 4, the Raman analysis spectrum characteristics and oxygen content of the carbon-based anode active material used in forming the anode active material layers, and the porosity of the anode active material layer are summarized and listed in Table 1. Porosity is expressed as volume %. In Example 4, the capacity of the cathode is 3.5 mAh/cm$^2$.

Raman analysis was performed using (Renishaw™ inVia™) (Laser 325, 514, 633, 830 nm, spatial resolution: approximately 250 nm).

Table 1

| Class. | Example 1 | | Example 2 | | Example 3 | | Example 4 | |
|---|---|---|---|---|---|---|---|---|
| | AL1 | AL2 | AL1 | AL2 | AL1 | AL2 | AL1 | AL2 |
| A(D)/A(G) | 3.75 | 1.35 | 3.75 | 1.40 | 3.75 | 1.26 | 3.75 | 1.65 |
| Oxygen content (at%) | 2.23 | 2.25 | 2.23 | 1.21 | 2.23 | 0.65 | 2.23 | 1.23 |
| Porosity (%) | 37 | 45 | 37 | 45 | 37 | 45 | 37 | 41 |

In Table 1, A(D) is an area of a D band peak, A(G) is an area of a G band peak, and the oxygen content was evaluated by X-ray photoelectron spectroscopy. XPS analysis was performed using Quantera II (Physical Electronics. Inc) (Photon source: Monochromatic Al K$\alpha$ (1486.6 eV), Beam size: 100 $\mu$m).

Referring to Table 1, the anodes of Examples 1, 2, 3, and 4 exhibit characteristics in which each of the oxygen content of the first carbon-based anode active material and the oxygen content of the second carbon-based anode active material was 3 at% or less.

Example 5

An anode-solid electrolyte sub-assembly and a solid secondary battery were manufactured in the same manner as in Example 1, except that the thickness ratio of the first anode active material layer to the second anode active material layer was changed to 1:1. In Example 5, the capacity of the cathode is 3.5 mAh/cm$^2$.

Example 6

An anode-solid electrolyte sub-assembly and a solid secondary battery were manufactured in the same manner as in Example 1, except that the thickness ratio of the first anode active material layer to the second anode active material layer was changed to 1:5. In Example 6, the capacity of the cathode is 3.5 mAh/cm$^2$.

Comparative Example 1: Anode current collector/First anode active material layer (AgC layer)/solid electrolyte/cathode

An anode-solid electrolyte sub-assembly and a solid secondary battery were manufactured in the same manner as in Example 1, except that only a first anode active material layer was formed on an anode current collector without forming a second anode active material layer.

According to Comparative Example 1, the change in volume due to lithium precipitation was large, and thus internal stress increased. As a result, cell pressing was required, and degradation occurred. The cell pressing of Comparative Example 1 is the same as the tightening pressure of Example 1 and has the same conditions.

Comparative Example 2: Anode current collector/Second anode active material layer (AL2)(porous carbon having characteristics shown in Table 2/AgNP/First anode active material layer (AL1)(AgC)/Solid electrolyte/Cathode [A$^1$(D)/A$^1$(G) > A$^2$(D)/A$^2$(G), Oxygen content of AL1 < 3 at%, Oxygen content of AL2 > 3 at%, Porosity of AL1 < Porosity of AL2]

An anode-solid electrolyte sub-assembly and a solid secondary battery were manufactured in the same manner as in Example 1, except that, when a slurry for forming a second anode active material layer(AL2) was prepared, porous carbon (Porocarb series) having characteristics shown in Table 2 below was used instead of the porous carbon (Porocarb L1104 manufactured by Heraeus Battery Technology).

Comparative Example 3: Anode current collector/ Second anode active material layer (AL2)(CB)/First anode active material layer (AL1)(AgC)/Solid electrolyte/Cathode [A$^1$(D)/A$^1$(G)=A$^2$(D)/A$^2$(G), Oxygen content of AL1 < 3 at%, Porosity of AL1=Porosity of AL2]

A solid secondary battery was manufactured in the same manner as Comparative Example 1, except that an anode-solid electrolyte sub-assembly was manufactured according to the following processes.

A mixture obtained by mixing 2.692 g of PVDF (Solef 5130) with 7 g of NMP was added to 4 g of CB( furnace black (FB-B) particles) with an average particle diameter of about 38 nm as a carbon-based material. The resulting mixture was stirred at a speed of 1,000 rpm for 30 minutes to prepare a slurry for forming a second anode active material layer.

The slurry was applied onto a SUS current collector (thickness: 10 $\mu$m), dried at room temperature (25 °C) for 1 hour, and then vacuum-dried in a vacuum oven at a temperature of 120 °C for 2 hours to prepare a second anode active material layer including a porous carbon structure and having a thickness of about 22.9 $\mu$m, to provide a stack structure of the anode current collector and the second anode active material layer.

3 g of Carbon black (CB) (furnace black (FB-B) particles) with an average particle diameter of about 38 nm as a first carbon-based anode active material and 1 g of silver (Ag) particles with an average particle diameter of about 60 nm (0.06 $\mu$m) were mixed. To this mixture, was added 2.692 g of PVDF (Solef 5130 manufactured by Solvay Specialty Polymers) and 7 g of NMP. The resulting mixture was stirred at a speed of 1,000 rpm for 30 minutes to prepare a slurry.

The slurry was applied onto the second anode active material layer of the stack structure, dried at room temperature (25 °C) for 1 hour, and then vacuum-dried in a vacuum oven at a temperature of 120 °C for 2 hours. The first anode active material layer has a thickness of 5.8 $\mu$m, thereby forming an anode. In the anode, a thickness ratio of the first anode active material layer to the second anode active material layer is 1:3.9.

A 600 $\mu$m-thick pellet including a Li$_6$PS$_5$Cl sulfide-based solid electrolyte was used as a solid electrolyte.

The solid electrolyte was provided on the first anode active material layer to form an anode-solid electrolyte sub-assembly.

Comparative Example 4: Anode current collector/Second anode active material layer (AL2) (AgC layer)/First anode active material layer (AL1) (porous carbon/AgNP)/Solid electrolyte/Cathode [A$^1$(D)/A$^1$(G) < A$^2$(D)/A$^2$(G), Oxygen content of AL1 and AL2 < 3 at%, Porosity of AL1 > Porosity of AL2]

An anode-solid electrolyte sub-assembly and a solid secondary battery were manufactured in the same manner as in Example 1, except that a stacking order of a first anode active material layer (AgC layer) and a second anode active material layer (porous carbon/AgNP) was reversed. The inventors confirmed that an effect of suppressing lithium dendrites was insignificant.

In Comparative Examples 1 to 4, the Raman analysis spectrum and oxygen content of the first carbon-based anode active material and the second carbon-based anode active material, and the porosity of the first anode active material layer and the second anode active material layer, are summarized as shown in Table 2. In Table 2, porosity is expressed as volume %.

Raman analysis was performed using (Renishaw™ inVia™) (Laser 325, 514, 633, 830 nm, spatial resolution: approximately 250 nm).

Table 2

| Class. | Comparative Example 1 | | Comparative Example 2 | | Comparative Example 3 | | Comparative Example 4 | |
|---|---|---|---|---|---|---|---|---|
| | AL1 | AL2 | AL1 | AL2 | AL1 | AL2 | AL1 | AL2 |
| A(D)/A(G) | 3.75 | - | 3.75 | 1.84 | 3.75 | 3.75 | 1.35 | 3.75 |
| Oxygen content (at%) | 2.23 | - | 2.23 | 7.76 | 2.23 | 2.23 | 2.25 | 2.23 |
| Porosity (vol%) | 37 | - | 37 | 45 | 37 | 37 | 45 | 37 |

In Table 2, the oxygen content was evaluated by XPS analysis, the oxygen content of the first carbon-based anode active material of the first anode active material layer in the anode of each of Comparative Examples 1 to 3 is 3 at% or less, the oxygen content of the second carbon-based anode active material of the second anode active material layer in the anode of Comparative Example 3 is 3 at% or less. The oxygen content of the second carbon-based anode active material of the second anode active material layer in the anode of Comparative Example 2 is 7.76 at%, showing high irreversibility characteristics. In this way, when using a carbon-based anode active material with such high irreversibility, initial efficiency may be significantly reduced.

Evaluation Example 1: Raman spectrum evaluation

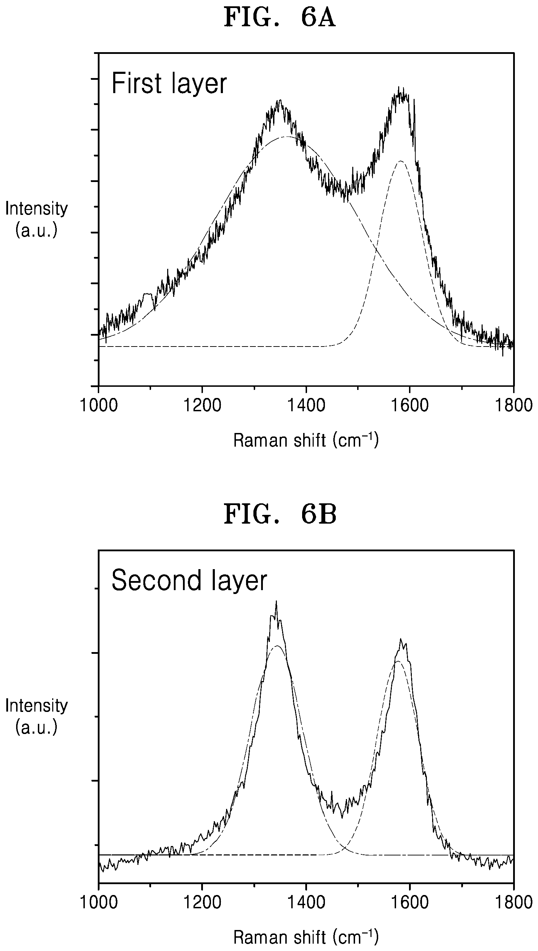

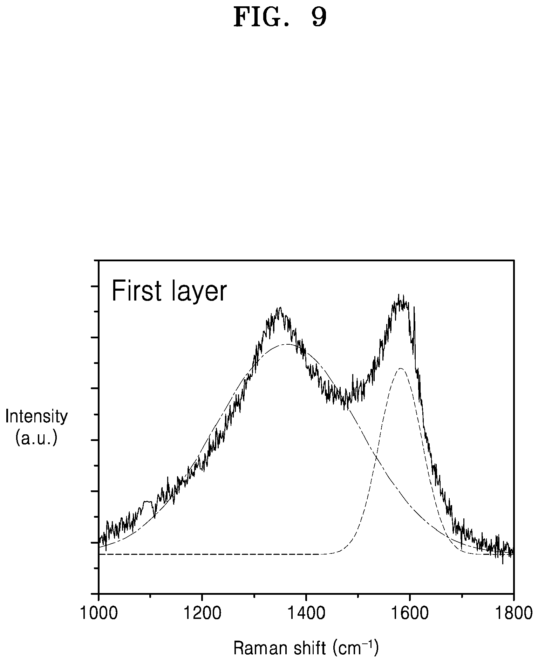

Raman analysis was performed on the surfaces of the first anode active material layer and the second anode active material layer prepared according to Examples 1 to 3 and Comparative Examples 1 to 3, and the data of the Raman analysis spectra are shown in Tables 3 to 8. The D band peak is a peak appearing at a Raman shift of 1340 cm$^{-1}$ to 1370 cm$^{-1}$, and the G band peak is a peak appearing at a Raman shift of 1570 cm$^{-1}$ to 1590 cm$^{-1}$, and the area ratio of the D band peak to the G band peak and/or the intensity ratio of the D band peak to the G band peak may indicate the degree of disorder, defects, etc. of the first carbon-based anode active material and the second carbon-based anode active material. In FIGS. 6A, 6B, 7A, 7B, 8A, 8B, 9, 10A, 10B, 11A, and 11B, the D-band peak intensity (ID) and the G-band peak intensity (IG) are each the height from the baseline to the highest point of the peak.

Raman analysis was performed using (Renishaw™ inVia™) (Laser 325, 514, 633, 830 nm, spatial resolution: approximately 250 nm).

Table 3

| Example 1 | | Center | Width | Height | Area | Area ratio | Intensity ratio |
|---|---|---|---|---|---|---|---|
| First layer (AL1) | D band peak | 1364 | 278.9 | 3286 | 717938 | $A^1D/A^1G$ =3.75 | $I^1D/I^1G$ =0.963 |
| | G band peak | 1584 | 84.2 | 3413 | 191487 | | |
| Second layer (AL2) | D band peak | 1344 | 101.5 | 1202 | 104319 | $A^2D/A^2G$ =1.35 | $I^2D/I^2G$ =1.140 |
| | G band peak | 1578 | 80.9 | 1054 | 77016 | | |

As shown in FIGS. 6A and 6B, in the Raman spectrum for the first anode active material layer, the area ratio and intensity ratio ($I^1D/I^1G$) of the D band peak to the G band peak are 3.75 and 0.963, respectively, and, in the Raman spectrum for the second anode active material layer, the area ratio and intensity ratio ($I^2D/I^2G$) of the D band peak to the G band peak are 1.35 and 1.140, respectively. Accordingly, it was confirmed that the first carbon-based anode active material included in the first anode active material layer has more defects and lower crystallinity as compared with the second carbon-based anode active material included in the second anode active material layer.

Additionally, as shown in Table 3, the position of the D band peak center in the Raman spectrum of the first carbon-based anode active material is blue-shifted by 20 cm$^{-1}$ as compared with the position of the D band peak center in the Raman spectrum of the second carbon-based anode active material. In addition, the position of the G band peak center in the Raman spectrum of the first carbon-based anode active material is blue-shifted by 6 cm$^{-1}$ as compared with the position of the G band peak center in the Raman spectrum of the second carbon-based anode active material.

Table 4

| Example 2 | | Center | Width | Height | Area | Area ratio | Intensity ratio |
|---|---|---|---|---|---|---|---|
| AL1 | D band peak | 1364 | 278.9 | 3286 | 717938 | $A^1D/A^1G$= 3.75 | $I^1D/I^1G$ =0.963 |
| | G band peak | 1584 | 84.2 | 3413 | 191487 | | |
| AL2 | D band peak | 1346 | 115.3 | 638.5 | 62406 | $A^2D/A^2G$= 1.40 | $I^2D/I^2G$ =1.077 |
| | G band peak | 1577 | 87.8 | 592.6 | 44560 | | |

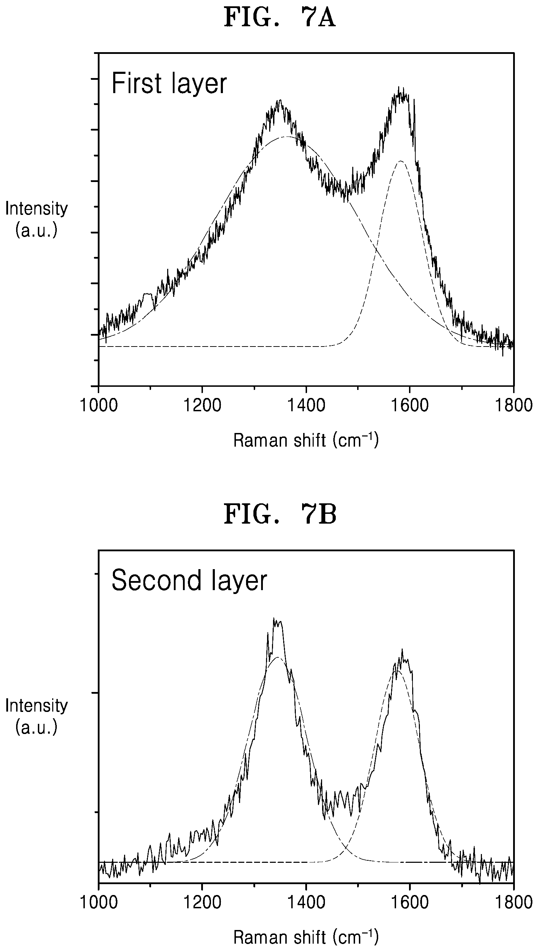

As shown in FIGS. 7A and 7B, in the Raman spectrum for the first anode active material layer, the area ratio and intensity ratio ($I^1D/I^1G$) of the D band peak to the G band peak are 3.75 and 0.963, respectively, and, in the Raman spectrum for the second anode active material layer, the area ratio and intensity ratio ($I^2D/I^2G$) of the D band peak to the G band peak are 1.40 and 1.077, respectively. Accordingly, it was confirmed that the first carbon-based anode active material included in the first anode active material layer has less defects and improved crystallinity as compared with the second carbon-based anode active material included in the second anode active material layer.

Additionally, as shown in Table 4, the position of the D band peak center in the Raman spectrum of the first carbon-based anode active material is blue-shifted by 18 cm$^{-1}$ as compared with the position of the D band peak center in the Raman spectrum of the second carbon-based anode active material. In addition, the position of the G band peak center in the Raman spectrum of the first carbon-based anode active material is blue-shifted by 7 cm$^{-1}$ as compared with the position of the G band peak center in the Raman spectrum of the second carbon-based anode active material.

Table 5

| Example 3 | | Center | Width | Height | Area | Area ratio | Intensity ratio |
|---|---|---|---|---|---|---|---|
| AL1 | D band peak | 1364 | 278.9 | 3286 | 717938 | $A^1D/A^1G$= 3.75 | $I^1D/I^1G$ =0.963 |
| | G band peak | 1584 | 84.2 | 3413 | 191487 | | |
| AL2 | D band peak | 1347 | 73.7 | 574 | 37103 | $A^2D/A^2G$= 1.26 | $I^2D/I^2G$ =1.139 |
| | G band peak | 1585 | 67.4 | 504 | 29390 | | |

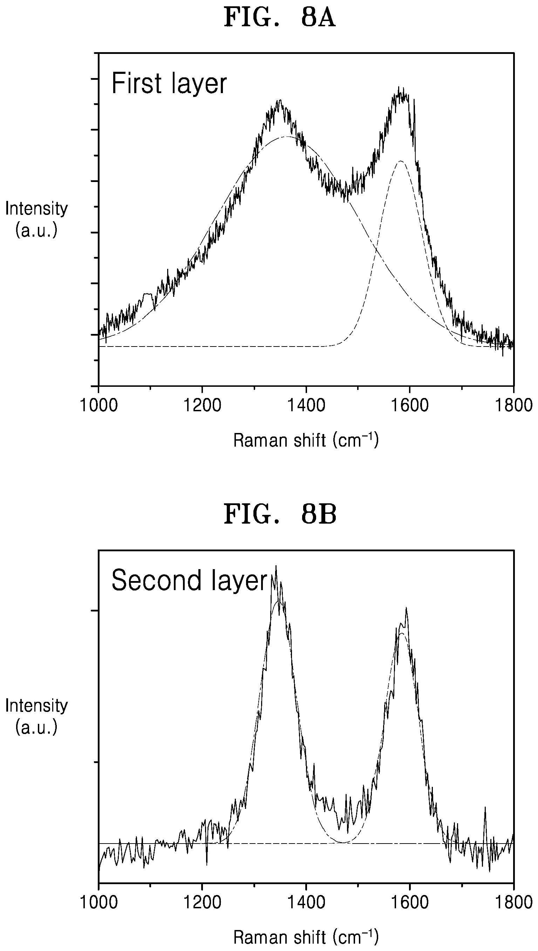

As shown in FIGS. 8A and 8B, in the Raman spectrum for the first anode active material layer, the area ratio and intensity ratio ($I^1D/I^1G$) of the D band peak to the G band peak are 3.75 and 0.963, respectively, and, in the Raman spectrum for the second anode active material layer, the area ratio and intensity ratio ($I^2D/I^2G$) of the D band peak to the G band peak are 1.26 and 1.139, respectively. Accordingly, it was confirmed that the first carbon-based anode active material included in the first anode active material layer has reduced defects and improved crystallinity as compared with the second carbon-based anode active material included in the second anode active material layer.

Additionally, as shown in Table 5, the position of the D band peak center in the Raman spectrum of the first carbon-based anode active material is blue-shifted by 17 cm$^{-1}$ as compared with the position of the D band peak center in the Raman spectrum of the second carbon-based anode active material. In addition, the position of the G band peak center in the Raman spectrum of the first carbon-based anode active material is red-shifted by 1 cm$^{-1}$ as compared with the position of the G band peak center in the Raman spectrum of the second carbon-based anode active material.

Table 6

| Comparative Example 1 | | Center | Width | Height | Area |
|---|---|---|---|---|---|
| AL1 | D band peak | 1364 | 278.9 | 3286 | 717938 |
| | G band peak | 1584 | 84.2 | 3413 | 191487 |

Table 7

| Comparative Example 2 | | Center | Width | Height | Area | Area ratio | Intensity ratio |
|---|---|---|---|---|---|---|---|
| AL1 | D band peak | 1364 | 278.9 | 3286 | 717938 | $A^1D/A^1G$ 3.75 | $I^1D/I^1G$ =0.963 |
| | G band peak | 1584 | 84.2 | 3413 | 191487 | | |
| AL2 | D band peak | 1353 | 183.1 | 1166 | 167585 | $A^2D/A^2G$ 1.84 | $I^2D/I^2G$ =0.925 |
| | G band peak | 1582 | 86.4 | 1260 | 90859 | | |

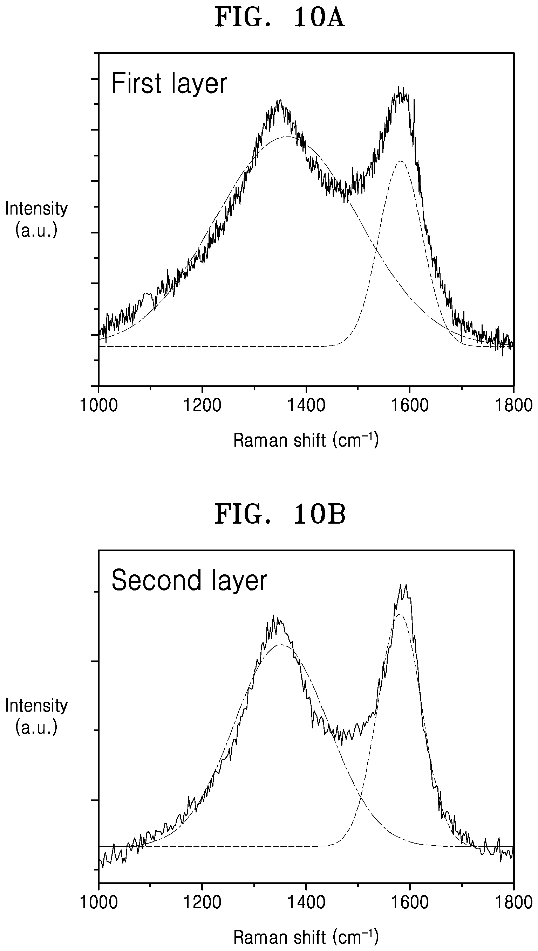

As shown in FIGS. 10A and 10B and Table 7, the position of the D band peak center in the Raman spectrum of the first carbon-based anode active material is blue-shifted by 11 cm$^{-1}$ as compared with the position of the D band peak center in the Raman spectrum of the second carbon-based anode active material. In addition, the position of the G band peak center in the Raman spectrum of the first carbon-based anode active material is blue-shifted by 2 cm$^{-1}$ as compared with the position of the G band peak center in the Raman spectrum of the second carbon-based anode active material.

Table 8

| Comparative Example 3 | | Center | Width | Height | Area | Area ratio | Intensity ratio |
|---|---|---|---|---|---|---|---|
| AL1 | D band peak | 1364 | 278.9 | 3286 | 717938 | $A^1D/A^1G$ =3.75 | $I^1D/I^1G$ =0.963 |
| | G band peak | 1584 | 84.2 | 3413 | 191487 | | |
| AL2 | D band peak | 1364 | 278.9 | 3286 | 717938 | $A^2D/A^2 G$ =3.75 | $I^2 D/I^2G$ =0.963 |
| | G band peak | 1584 | 84.2 | 3413 | 191487 | | |

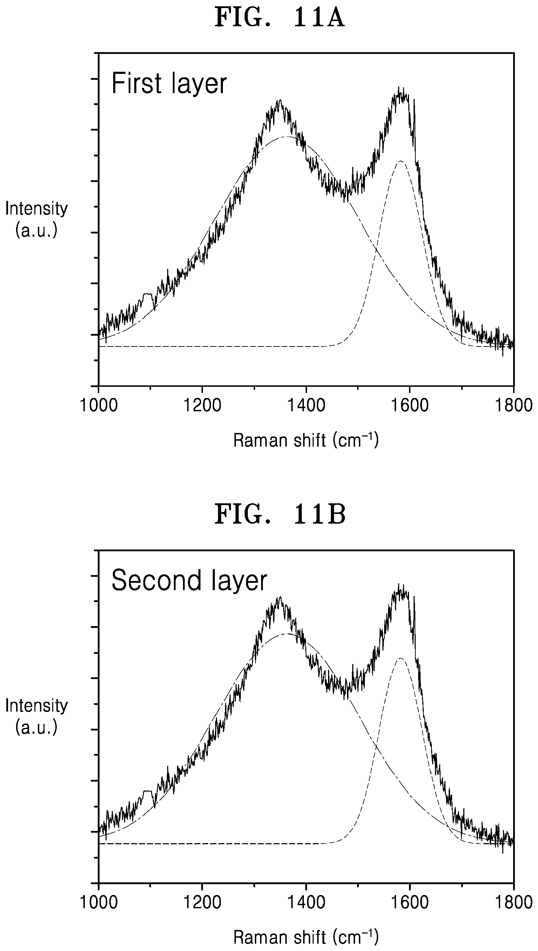

As shown in FIGS. 11A and 11B, in the Raman spectrum, the area ratio and intensity ratio of the D band peak to the G band peak of the first anode active material layer showed the same result as the area ratio and intensity ratio of the D band peak to the G band peak of the second anode active material layer. In addition, as shown in Table 8, the position of the D band peak center in the Raman spectrum of the first carbon-based anode active material was the same as the position of the D band peak center in the Raman spectrum of the second carbon-based anode active material. In addition, the position of the G band peak center in the Raman spectrum of the first carbon-based anode active material was the same as the position of the G band peak center in the Raman spectrum of the second carbon-based anode active material.

Evaluation Example 2: Focused Ion Beam (FIB)-Scanning Electron Microscopy (SEM) Analysis

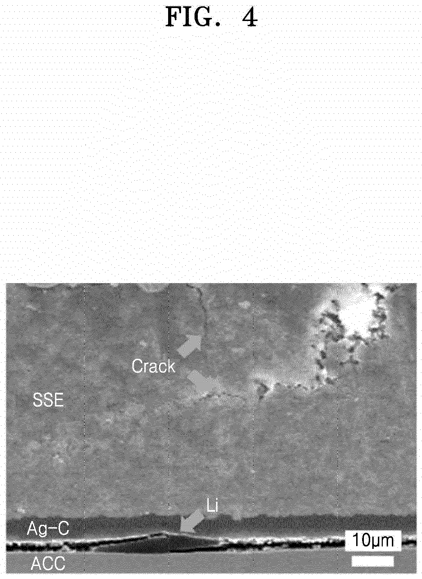

FIB-SEM analysis was performed on each anode during low-pressure operation for all-solid-state secondary batteries having the anodes according to Example 1 and Comparative Example 1.
A solid secondary battery having undergone a formation cycle was charged at a constant current of 0.1 C rate at 25°C until a voltage reached 4.25 V (vs. Li). Subsequently, the solid secondary battery was discharged at a constant current of 0.1 C rate until the voltage reached 2.5 V (vs. Li) during discharging.
The cross-sectional state of the anode before and after charging was analyzed using a scanning electron microscope. FIG. 4 shows a FIB-SEM image of the anode of Comparative Example 1. As shown in FIG. 4, in the anode of Comparative Example 1, cracks occurred in the solid electrolyte layer due to uneven growth of lithium.
In comparison, as a result of examining the cross-sectional images of the second anode active material layer in the anode of Example 1 before and after charging, it was confirmed that lithium precipitated in the pores of the second anode active material layer having high porosity during charging. It was found that the low-pressure cell operation was possible because the occurrence of deterioration such as cracking of the solid electrolyte layer was reduced due to reduced pressure change. Lithium precipitates into the pores of the second layer having high porosity, thereby filling the pores. Therefore, the pressure and uneven lithium precipitation occurring during charging and discharging are significantly reduced, thereby preventing the deterioration of the lifespan of the battery. When using the anode of Example 1, the reduced occurrence of deterioration such as cracking of the electrolyte layer resulting from a reduced differential in pressure change enables low-pressure cell operation.

Evaluation Example 3: Change in pressure

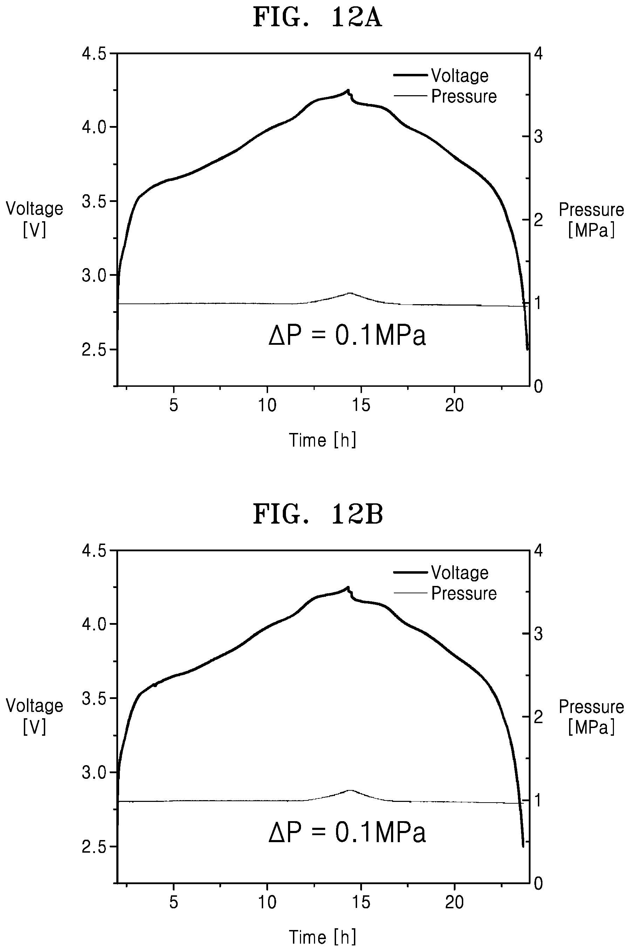

The solid secondary batteries of Examples 1 to 3 and Comparative Examples 1 to 3 were charged at a temperature of 25 °C with a charge current of 0.1 C until a charge terminal voltage reached 4.25 V, and a charge/discharge test was performed under the condition of a discharge current of 0.1 C and a terminal voltage of 2.5 V. Then, the voltage and pressure changes over time were investigated, and the results thereof are shown in FIG. 12A to FIG. 12F, respectively.

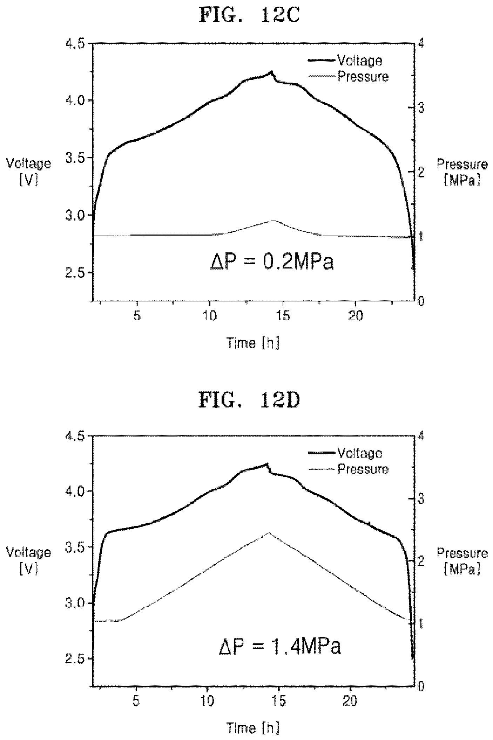

FIG. 12D shows a change in internal pressure upon charging and discharging of a precipitation-type anode including a AgC single layer in the solid secondary battery of Comparative Example 1. Referring to FIG. 12D, when a cell was operated under a pressure of 1 MPa, the internal pressure increased linearly and the pressure was changed up to a maximum of 1.4 MPa, as lithium precipitated. During discharging, external pressure was required to push the lithium, and in this regard, deterioration of the solid secondary battery occurred due to strain inside the cell.

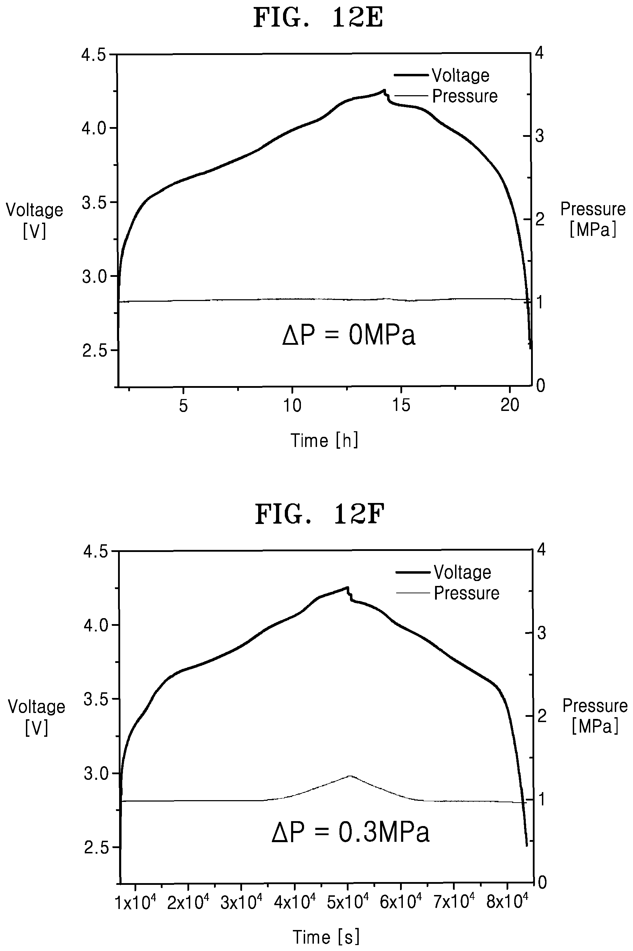

Regarding the solid secondary battery of Comparative Example 2, as shown in FIG. 12E, when a cell was operated under a pressure of 1 MPa, there was little change in pressure, but as shown in the lifespan evaluation example described below, the life characteristics of the solid secondary battery were significantly reduced to 62.7 % at the 200th cycle due to low Coulomb efficiency. Furthermore, regarding the solid secondary battery of Comparative Example 3, as shown in FIG. 12F, when a cell was operated under a pressure of 1 MPa, the pressure was changed up to 0.3 MPa.

On the other hand, in the solid secondary battery of Example 1, as shown in FIG. 12A, an amount of change in internal stress was 0.1 MPa. In this way, since lithium precipitated in the second anode active material layer during charging and discharging, a change in internal stress was considerably reduced, and thus the anode could be operated with little or no amounts of stress. As a result, a change in internal stress could be minimized, thereby improving cell lifespan characteristics and securing low-pressure driving characteristics. The reason for such results was that lithium passing through the AgC single layer precipitated between the AgC single layer and the current collector in Comparative Example 1 so that the pressure changed according to the volume change, but in the solid secondary battery of Example 1, lithium precipitated in the pores of the porous carbon structure of the second anode active material layer so that the pressure change was minimized to enable low-pressure operation and to prevent cell deterioration due to internal strain.

As shown in FIG. 12B, the pressure change in the solid secondary battery of Example 2 was found to be 0.1 MPa or less, and as shown in FIG. 12C, the pressure change in the solid secondary battery of Example 3 was found to be 0.2 MPa or less. As a result, it is confirmed that the solid secondary batteries of Examples 2 and 3 also exhibit strain reduction.

The reason for the results is the lithium passing through the AgC single layer precipitates between the AgC single layer and the current collector in Comparative Example 1 so that the pressure changes according to the volume change, but in Examples 1 to 3, lithium precipitates in the pores of the porous carbon structure of the second anode active material layer and between the second anode active material layer and the anode current collector so that the volume change is minimal if any.

Evaluation Example 4: Lifespan characteristics

The solid secondary batteries of Examples 1 to 3 and the solid secondary batteries of Comparative Examples 1 to 3 were evaluated according to the following method to investigate charge/discharge profile characteristics.

The solid secondary battery batteries were subjected to a formation cycle under the following conditions.

The solid secondary battery was charged at a constant current of 0.1C until the battery voltage reached 4.25V. Then, the solid secondary battery was discharged at a constant current of 0.1C until the battery voltage reached 2.5V.

The solid secondary batteries having undergone a formation cycle were charged at a constant current rate of 0.1 C at a temperature of 25 °C until a voltage reached 4.3 V (vs. Li). Subsequently, the solid secondary batteries were discharged at a constant current rate of 0.1 C until the voltage reached 2.5 V (vs. Li) during discharging. Such a charge/discharge cycle was repeated 5 times (1st to 5th cycles).

The solid secondary batteries having undergone a 5th cycle were charged at a constant current rate of 0.1 C at a temperature of 25 °C until a voltage reached 4.3 V (vs. Li). Subsequently, the solid secondary batteries were discharged at a constant current rate of 0.2 C until the voltage reached 2.5 V (vs. Li) during discharging. Such a charge/discharge cycle was repeated 195 times in total. (6th to 200th cycles)

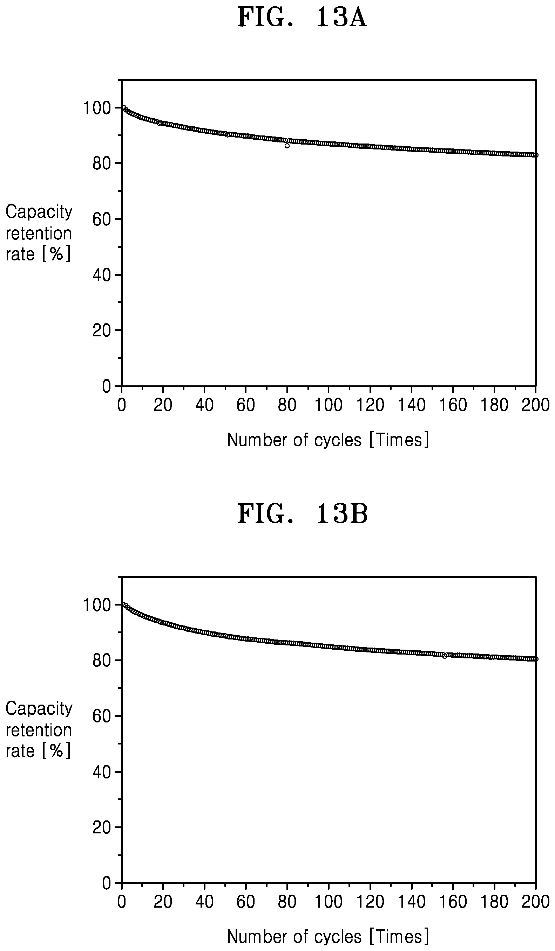

The capacity retention rate of each of the solid secondary batteries after a charging/discharging process was evaluated, and the results thereof are shown in FIGS. 13A to 13F.

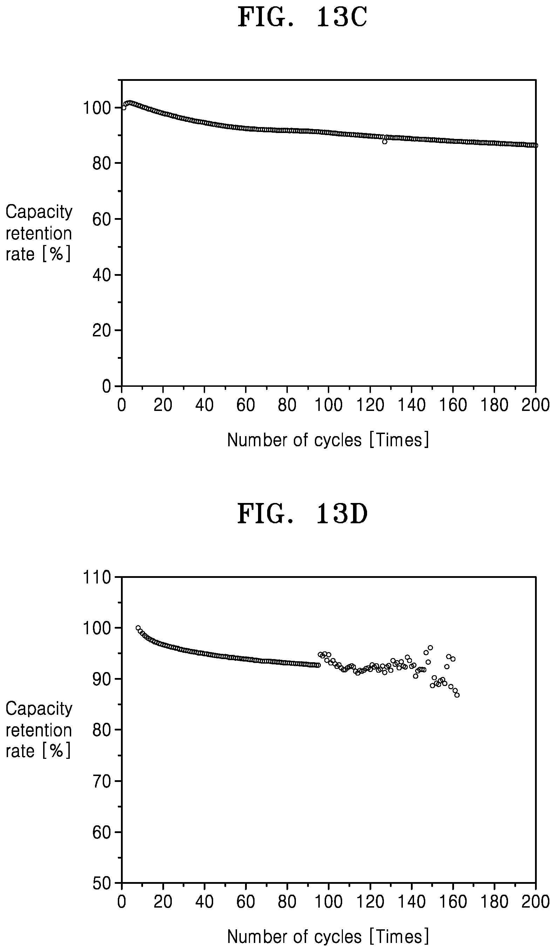

As shown in FIGS. 13A, 13B, and 13C, the solid secondary batteries of Example 1, Example 2, and Example 3 were normally charged and discharged 200 times or more and exhibited excellent lifespan characteristics.

In comparison, in the solid secondary batteries of Comparative Examples 1 to 3, a micro-short phenomenon, see, Fig. 13D, and cell deterioration occurred due to irregular lithium precipitation during low-pressure operation, so that the lifespan characteristics of the solid secondary batteries of Comparative Examples 1 to 3 greatly deteriorated as compared with the lifespan characteristics of the solid secondary batteries of Examples 1 to 3.

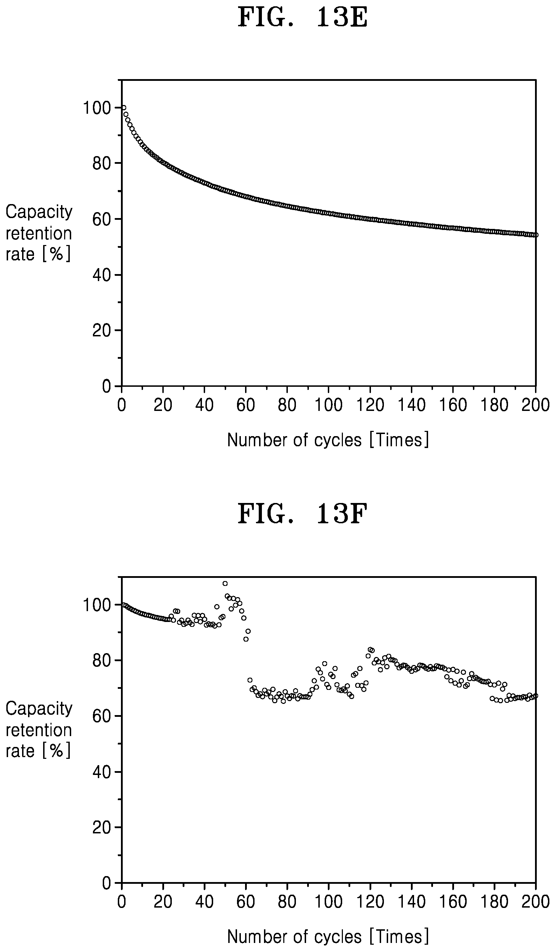

The solid secondary battery of Comparative Example 2 has the anode having the second anode active material layer containing the second carbon-based anode active material having a high oxygen content of 7.76 at%. In this solid secondary battery, as shown in FIG. 13E, initial efficiency was greatly reduced, and 20-cycle lifespan was reduced to 80 % or less. In the solid secondary battery of Comparative Example 3, as shown in FIG. 13F, when the first anode active material layer and the second anode active material layer were formed of the same carbon-based anode active material, a pressure reduction effect decreased, and lifespan after 20 cycles deteriorated.

Evaluation Example 5: Analysis of porosity, particle size, and pore volume of anode

The porosity, particle size, and pore volume of the anodes of Examples 1 to 4 and Comparative Example 1 to 3 were measured, and the results are listed in Tables 9 and 10. In Tables 9 and 10, a first layer represents the first anode active material layer, a second layer represents the second anode active material layer, and C of the first layer represents a carbon based anode active material. The porosity was calculated by using Equation 1 below, and the interparticle pore volume was calculated by using Equation 2 below.

## Equation 1

$$\text{Porosity (vol\%)} = [1-(D/T)] \times 100$$

In Equation 1, D denotes a density of a layer to be measured, and a true density T refers to the sum of true densities of all components constituting the layer to be measured.

Interparticle pore volume (vol%) = porosity (vol%) - intraparticle pore volume (vol%)         Equation 2

In Tables 9 and 10, the pore volume, the porosity, and the pore size are all represented as average values.

Table 9

| EX. | Porosity (vol%) | | | Particle size | |
|---|---|---|---|---|---|
| | First layer | Second layer | Total of first layer and second layer | First layer (nm) | Second layer[a] |
| Ex. 1 | 37 | 45 | 41 | C:38 | C: 1 $\mu$m |
| | | | | Ag: 60 | Ag: 60 nm |
| Ex. 2 | 37 | 45 | 41 | C: 38 | C: 1.5 $\mu$m |
| | | | | Ag: 60 | Ag: 60 nm |
| Ex. 3 | 37 | 45 | 41 | C: 38 | C: 1.5 $\mu$m |
| | | | | Ag: 60 | Ag: 60 nm |
| Ex. 4 | 37 | 41 | 39 | C: 38 | C: 1 $\mu$m |
| | | | | Ag: 60 | Ag: 60 nm |
| CE 1 | 37 | - | 37 | C: 38 | - |
| | | | | Ag: 60 | |
| CE 2 | 37 | 45 | 41 | C: 38 | C: 1 $\mu$m |
| | | | | Ag: 60 | Ag: 60nm |
| CE 3 | 37 | 37 | 37 | C: 38 | C: 38nm |
| [a] value listed in nanometers except as indicated. | | | | | |

Table 10

| Example | Second anode active material layer (second layer) | | | |
|---|---|---|---|---|
| | Size of intraparticle pores (nm) | Volume of intraparticle pores (vol%) | Size of interparticle pores (nm) | Volume of interparticle pores (vol%) |
| 1 | 110 | 29 | 74 | 16 |
| 2 | 110 | 30 | 77 | 15 |
| 3 | 115 | 28 | 75 | 17 |
| 4 | - | - | 62 | 18.7 |

Evaluation Example 6: Analysis of content of lithium charged and discharged by reaction between carbon-based anode active material and lithium

The solid secondary battery of Example 1 was used as a full cell using a solid electrolyte, and a half cell using a liquid electrolyte was prepared according to the following process. Then, the content of lithium charged and discharged through a reaction between a carbon-based anode active material and lithium was analyzed by using the charge/-discharge characteristics of the full cell and the half cell.

Preparation of half-cell using liquid electrolyte

First, a first electrode was prepared according to the following process.

Porous carbon (Porocarb L1104 manufactured by Heraeus Battery Technology) and Ag nanoparticles (average particle diameter: 60 nm (0.06 $\mu$m)) were mixed at a weight ratio of 3:1 to provide a first mixture. A second mixture was prepared by mixing 2.692 g of a PVDF binder solution (Solef 5130 manufactured by Solvay Specialty Polymers) with 7 g of NMP. The second mixture was added to the first mixture, and the resulting mixture was stirred at a speed of 1,000 rpm for 30 minutes to prepare a slurry for forming a second anode active material layer.

The porous carbon has a modal pore size of about 110 nm, a pore volume of 0.35 cm$^3$/g, a bulk density of about 150 g/dm$^3$, a specific surface area of 600 m$^2$/g, a D10 of 0.3 $\mu$m, a D90 of 3.0 $\mu$m, and a D50 of 1.0 $\mu$m. As used herein, the pore size refers to an average pore diameter.

This slurry was applied onto a copper foil current collector having a thickness of 20 $\mu$m as an anode current collector, dried at room temperature (25 °C) for 1 hour, and then vacuum-dried in a vacuum oven at a temperature of 120 °C for 2 hours to prepare a second anode active material layer including a porous carbon structure and having a thickness of about 22.9 $\mu$m, resulting in a stack structure including the anode current collector and the second anode active material layer.

3 g of Carbon Black (CB) with an average particle diameter of about 38 nm as a carbon-based material was mixed with 1 g of Ag particles with an average particle diameter of about 60 nm to provide a first mixture. A second mixture was obtained by mixing 2.692 g of a PVDF (Solef 5130) with 7 g of NMP. The second mixture was added to the first mixture, and the resulting mixture was stirred at a speed of 1,000 rpm for 30 minutes to provide a slurry for forming a first anode active material layer. This slurry was applied onto the second anode active material layer of the above stack structure of the anode current collector and the second anode active material, dried at room temperature (25 °C) for 1 hour, and then vacuum-dried in a vacuum oven at a temperature of 120 °C for 2 hours forming an anode. The first anode active material layer had a thickness of 5.8 $\mu$m. In the anode, a thickness ratio of the first anode active material layer to the second anode active material layer is 1:3.9.

A lithium metal having a thickness of 30 $\mu$m was used as a second electrode (counter electrode).

A porous polyethylene film (thickness: 12 $\mu$m) was used as a separator. A battery stack was manufactured by placing the separator between the first electrode and the second electrode. The battery stack was then processed into a 2032 coin half cell.

Next, lithium hexafluorophosphate (LiPF$_6$) was dissolved in a non-aqueous solvent containing ethylene carbonate and dimethyl carbonate at a volume ratio of 3:7 to produce an electrolyte to have a concentration of 1.3 mol/L. The prepared electrolyte was injected into the 2032 coin half cell, and the separator was impregnated with the electrolyte to manufacture a half cell.

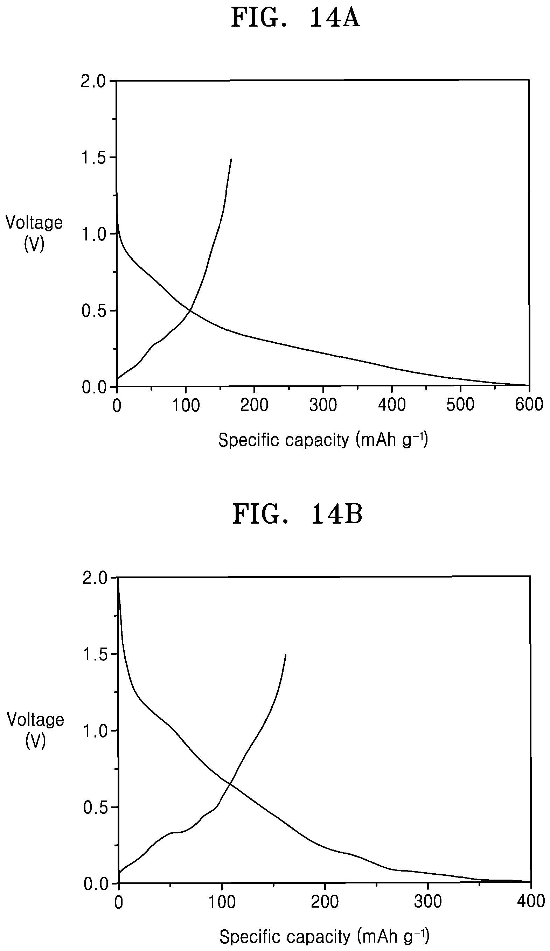

In the full cell using the solid electrolyte and the half cell using the liquid electrolyte, a voltage change according to specific capacity was determined, and the results are shown in the plots of FIGS. 14A (full cell) and 14B (half cell), respectively.

As indicated by the data plots, the voltage characteristics of the full cell using the solid electrolyte exhibits an improvement in the voltage characteristics as compared to the half cell using the liquid electrolyte.

In addition, the discharge capacity per unit area of the half cell using the liquid electrolyte obtained through the above process is about 0.5 milliamperes-hr per square centimeter (mAh/cm$^2$), whereas the discharge capacity per unit area of the full cell using the solid electrolyte is 3.2 mAh/cm$^2$. When lithium is stored in pores having a porosity of 45 vol%, the discharge capacity per unit area is 2.95 mAh/cm$^2$. Therefore, in the half cell using the liquid electrolyte, the maximum charge capacity is 4.24 mAh/cm$^2$, and the discharge capacity is 3.49 mAh/cm$^2$, and in this regard, the charge/discharge efficiency is 82.3 %.

In the full-cell using a solid electrolyte, the maximum charge capacity is 4.85 mAh/cm$^2$, the discharge capacity is 3.5 mAh/cm$^2$, the charge-discharge efficiency with possible side reactions of Li and LPSCI is 72.2 %, and the actual initial charge-discharge efficiency is 76.5 %.

Finally, it was determined that the amount of lithium charged and discharged within carbon was about 17.19%, and the remaining 83% was stored as lithium metal.

When an anode-solid electrolyte sub-assembly for a solid secondary battery according to an embodiment is used, lithium is stored in the pores of a second anode active material layer during charging. As a result, a change in volume may be decreased, and internal stress may be minimized. Moreover, with a first anode active material layer positioned between the second anode active material layer and a solid electrolyte lithium moves uniformly at an electrolyte/anode interface and suppresses the growth of lithium dendrites. The resulting solid secondary battery is demonstrated to have improved lifespan characteristics, particularly, when operated at a low-pressure.

Although one or more embodiments have been described above with reference to drawings and examples, this is merely exemplary, and those skilled in the art will understand that various modifications and equivalent other implementations are possible. Accordingly, the scope of protection of the present application should be defined by the appended claims.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. An anode-solid electrolyte subassembly comprising

   an anode, and a solid electrolyte,
   wherein the anode comprises:

   an anode current collector;
   a first anode active material layer disposed adjacent to the solid electrolyte and including a first carbon-based anode active material; and
   a second anode active material layer disposed between the first anode active material layer and the anode current collector and including a second carbon-based anode active material,

   wherein an area ratio ($A^1D/A^1G$) of a D band peak to a G band peak obtained by Raman analysis of the first carbon-based anode active material is greater than an area ratio ($A^2D/A^2G$) of a D band peak to a G band peak obtained by Raman analysis of the second carbon-based anode active material, and
   the first carbon-based anode active material and the second carbon-based anode active material each have an oxygen content of 3 at% or less as determined by X-ray photoelectron spectroscopy (XPS) analysis.

2. The anode-solid electrolyte sub-assembly of claim 1, wherein the area ratio $A^1D/A^1G$ is 2 or more, and the area ratio $A^2D/A^2G$ is less than 2.

3. The anode-solid electrolyte sub-assembly of claims 1 or 2, wherein an intensity ratio ($I^1D/I^1G$) of a D band peak to a G band peak of the first carbon-based anode active material is less than an intensity ratio ($I^2D/I^2G$) of a D band peak to a G band peak of the second carbon-based anode active material,

   the intensity ratio ($I^1D/I^1G$) is 0.98 or less, and
   the intensity ratio ($I^2D/I^2G$) is 1 or more.

4. The anode-solid electrolyte sub-assembly of any of claims 1-3, wherein a position of a D band peak center in a Raman spectrum of the first carbon-based anode active material is blue-shifted by 15.0 $cm^{-1}$ or more, as compared with a position of a D band peak center in a Raman spectrum of the second carbon-based anode active material, and
   a width of the D band peak in the Raman spectrum of the first carbon-based anode active material is at least twice as large as a width of the D band peak in the Raman spectrum of the second carbon-based anode active material.

5. The anode-solid electrolyte sub-assembly of any of claims 1-4, wherein each of the first carbon-based anode active material and the second carbon-based anode active material has an oxygen content of 0.01 at% or greater as determined by XPS analysis; and/or
   wherein the second anode active material layer has a greater porosity than the first anode active material layer, the porosity of the second anode active material layer is 40 vol% to 80 vol%, and the porosity of the first anode active material layer is less than 40 vol%.

**6.** The anode-solid electrolyte sub-assembly of any of claims 1-5, wherein the first carbon-based anode active material and the second carbon-based anode active material include hard carbon; and/or
wherein carbon of the first carbon-based anode active material has an average particle diameter of 10 nm to 200 nm, and carbon of the second carbon-based anode active material has an average particle diameter of 0.2 $\mu$m to 10 $\mu$m.

**7.** The anode-solid electrolyte sub-assembly of any of claims 1-6, wherein the second carbon-based anode active material includes a porous carbon structure having an average particle diameter of 0.2 $\mu$m to 10 $\mu$m; and/or
wherein the first anode active material layer and/or the second anode active material layer further includes at least one metal or metalloid anode active material of tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof.

**8.** The anode-solid electrolyte sub-assembly of any of claims 1-7, wherein the first anode active material layer includes the first carbon-based anode active material and a first particle of at least one of a metal or a metalloid anode active material, and
a content of the first particle is 1 wt% to 60 wt%, based on a total weight of the first carbon-based anode active material and the first particle.

**9.** The anode-solid electrolyte sub-assembly of any of claims 1-8, wherein the second anode active material layer includes the second carbon-based anode active material and a second particle of at least one of a metal or a metalloid anode active material, and
a content of the second particle is 1 wt% to 60 wt%, based on a total weight of the second carbon-based anode active material and the second particle.

**10.** The anode-solid electrolyte sub-assembly of any of claims 1-9, wherein a thickness of the second anode active material layer is greater than a thickness of the first anode active material layer, and
a thickness ratio of the first anode active material layer to the second anode active material layer is 1:1.2 to 1:5.

**11.** A solid secondary battery comprising:

a cathode; and the anode-solid electrolyte sub-assembly of any of claims 1-10, wherein
the solid electrolyte of the anode-solid electrolyte sub-assembly is disposed between the cathode and the anode;
preferably wherein the solid electrolyte comprises a sulfide-based solid electrolyte, an oxide-based solid electrolyte, a polymer solid electrolyte, a polymer gel electrolyte, or a combination thereof.

**12.** The solid secondary battery of claim 11, wherein the cathode includes a cathode current collector, wherein

at least one of the cathode current collector and the anode current collector of the anode-solid electrolyte sub-assembly includes a base film and a metal layer disposed on one side or both sides of the base film,
wherein the base film includes a polymer selected from polyethylene terephthalate (PET), polyethylene (PE), polypropylene (PP), polybutylene terephthalate (PBT), polyimide (PI), or a combination thereof, and
the metal layer includes a metal selected from indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**13.** The solid secondary battery of claims 11 or 12, wherein the battery is in a charged state and a lithium-precipitation layer is disposed between the anode current collector and the second anode active material layer, and
the lithium-precipitation layer includes lithium, a lithium alloy, or a combination thereof.

**14.** The solid secondary battery of claim 13, wherein pores of the second anode active material layer contain lithium, a lithium alloy, or a combination thereof; and/or
wherein a content of lithium metal that is charged and discharged by reaction of lithium with the first carbon-based anode active material and the second carbon-based anode active material is 20 % or less, based on a total capacity of the solid secondary battery.

**15.** A method of manufacturing the solid secondary battery of any of claims 11 to 14, the method comprising:

coating a surface of an anode current collector with a composition for forming a second anode active material layer, the composition comprising a second carbon-based anode active material and drying the composition to form a second anode active material layer in contact with a surface of the anode current collector;

coating the second anode active material layer with a composition for forming a first anode active material layer including a first carbon-based anode active material and drying the composition to form a first anode active material layer;

providing a solid electrolyte on the first anode active material layer to provide an anode-solid electrolyte sub-assembly; and

providing a cathode on the solid electrolyte of the anode-solid electrolyte sub-assembly to provide a battery assembly for the solid secondary battery.

# FIG. 1

# FIG. 2A

# FIG. 2B

# FIG. 3A

# FIG. 3B

# FIG. 3C

# FIG. 4

# FIG. 5A

# FIG. 5B

# FIG. 5C

## FIG. 6A

First layer

Intensity (a.u.)

1000   1200   1400   1600   1800

Raman shift (cm⁻¹)

## FIG. 6B

Second layer

Intensity (a.u.)

1000   1200   1400   1600   1800

Raman shift (cm⁻¹)

## FIG. 7A

## FIG. 7B

## FIG. 8A

## FIG. 8B

# FIG. 9

## FIG. 10A

## FIG. 10B

## FIG. 11A

## FIG. 11B

## FIG. 12A

ΔP = 0.1MPa

Time [h]

## FIG. 12B

ΔP = 0.1MPa

Time [h]

## FIG. 12C

ΔP = 0.2MPa

## FIG. 12D

ΔP = 1.4MPa

## FIG. 12E

ΔP = 0MPa

## FIG. 12F

ΔP = 0.3MPa

# FIG. 13A

# FIG. 13B

## FIG. 13C

## FIG. 13D

## FIG. 13E

## FIG. 13F

## FIG. 14A

## FIG. 14B

# FIG. 15A

1

40

11 ⎫
    ⎬ 10
12 ⎭

30

22 ⎫
23 ⎬ 20
21 ⎭

# FIG. 15B

# FIG. 15C

**REFERENCES CITED IN THE DESCRIPTION**

**Patent documents cited in the description**

- KR 20180035229 A
- KR 102510548
- KR 102484569